Europäisches Patentamt

European Patent Office

Office européen des brevets

(11) Publication number: **0 228 904 B1**

# EUROPEAN PATENT SPECIFICATION

(45) Date of publication of patent specification: **02.09.92**   (51) Int. Cl.⁵: **G11B 23/04**, G11B 25/10

(21) Application number: **86310120.0**

(22) Date of filing: **23.12.86**

(54) **Magnetic tape cartridges.**

(30) Priority: **28.12.85 JP 293526/85**
  **28.12.85 JP 199944/85**

(43) Date of publication of application:
  **15.07.87 Bulletin 87/29**

(45) Publication of the grant of the patent:
  **02.09.92 Bulletin 92/36**

(84) Designated Contracting States:
  **AT CH DE ES FR GB IT LI NL**

(56) References cited:
  **EP-A- 0 195 571**
  **FR-A- 1 181 649**
  **FR-A- 2 161 529**
  **US-A- 2 694 110**
  **US-A- 3 624 310**

(73) Proprietor: **SONY CORPORATION**
**7-35 Kitashinagawa 6-chome Shinagawa-ku**
**Tokyo 141(JP)**

Proprietor: **Hewlett-Packard Company**
**Mail Stop 20 B-O, 3000 Hanover Street**
**Palo Alto, California 94304(US)**

(72) Inventor: **Ohta, Toshiro c/o Patents Division**
**Sony Corporation 7-35 Kitashinagawa**
**Shinagawa-ku Tokyo 141(JP)**
Inventor: **Henze, Richard H.**
**c/o Hewlett Packard Company 3000 Hanover**
**Street**
**Palo Alto California 94303-1181(US)**
Inventor: **McConica, Charles H.**
**c/o Hewlett Packard Company 3000 Hanover**
**Street**
**Palo Alto California 94303-1181(US)**
Inventor: **Clifford, George**
**c/o Hewlett Packard Company 3000 Hanover**
**Street**
**Palo Alto California 94303-1181(US)**
Inventor: **Spenner, Bruce F.**
**c/o Hewlett Packard Company 3000 Hanover**
**Street**
**Palo Alto California 94303-1181(US)**

(74) Representative: **Thomas, Christopher Hugo et**
**al**
**D Young & Co 10 Staple Inn**
**London WC1V 7RD(GB)**

# Description

## Description for the contracting states : AT, CH (+LI), DE, FR, GB, IT, NL

This invention relates to magnetic tape cartridges.

Various magnetic discs and disc drives have been proposed for storing data. For example, US patent US-A-4 445 155 discloses a typical microfloppy disc, that is a 3.5 inch (approximately 89 mm) floppy disc, and a disc drive therefor. The floppy disc is in the form of a floppy disc cartridge (or cassette) generally comprising a flexible magnetic disc and a cartridge (or cassette) casing. The flexible disc includes a centre core disc designed to be chucked on a turntable of the disc drive which rotates the flexible disc through the centre core disc.

Such floppy discs permit fast access. However, floppy discs have a limited data storage capacity, and archival or back-up storage of data stored on a hard disc generally requires twenty to eighty floppy discs. This involves substantial expense.

On the other hand, magnetic tapes have a much larger storage capacity than floppy discs, but are inconvenient when fast access to data is required. In other words, when fast access is not required, magnetic tapes are useful because of their large storage capacity. Therefore, as back-up storage for hard discs, magnetic tapes should be regarded as a useful and convenient medium to use.

In order to record and reproduce data on or from magnetic tapes, a so-called 'data recorder' magnetic tape recording and reproducing apparatus is used, whereas recording and reproduction of data on and from magnetic discs is performed using a disc drive. Consequently, to use magnetic tapes as back-up storage media, a data recorder and a disc drive are required, which is an additional expense.

So as to allow the use of magnetic tape for inexpensive back-up storage of data on hard discs or floppy discs, it would be beneficial to provide a magnetic tape cartridge compatible with floppy disc drives, so that it can be driven by the same drive unit. For this purpose, there has been proposed a disc-drive-compatible magnetic tape cartridge in Japanese patent first publication (Tokkai) 61/214188, published on 24 September 1986. This proposed magnetic tape cartridge can utilize the read/write head or heads of a disc drive to write data on and/or read data from a magnetic tape. The magnetic tape cartridge contains the tape, a mechanism to register the tape with respect to a location at which data are written on the tape or are read from the tape by the read/write head or heads of the disc drive, means for storing the tape, and a mechanism to feed the tape past the read/write head or heads. The magnetic tape cartridge has a portion having an external shape and size which allow that portion to be inserted into the disc drive to enable the tape to be placed in the vicinity of the read/write head or heads.

Such a magnetic tape cartridge is successful in making magnetic tape usable in a disc drive. However, a difficulty has arisen in attempting to achieve high-density recording on the tape. This results from difficulty in accurately positioning the tape with respect to the disc drive head. Namely, in the usual 3.5 inch (approximately 89 mm) floppy disc, the magnetic disc is precisely coaxially formed with a centre core disc. Therefore, by chucking the centre core disc onto a turntable of a disc drive, the floppy disc can be accurately positioned with respect to the disc drive head. Therefore, recording tracks on the floppy disc can be precisely positioned at respective predetermined positions for accurate tracking of the disc drive head. On the contrary, the above-mentioned magnetic tape cartridge has a centre core disc merely serving as a means for transmitting the driving force of a disc driving spindle motor to a tape drive mechanism. The tape run path is defined irrespective of the centre core disc. Therefore, the radial distance from the rotational axis of the centre core disc as chucked on the turntable of the disc drive, to each recording track on the tape is not predetermined. This makes it difficult accurately to track each recording track on the magnetic tape, so high-density recording is not possible, because of the unstable tape position with respect to the disc drive head.

Hewlett-Packard Company European patent specification EP-A2-0 195 571 (published 24 September 1986) and Sony Corporation European patent specification EP-A2-0 214 820 (published 18 March 1987) disclose magnetic tape cartridges of the general kind disclosed and claimed herein. US patent specification US-A-3 624 310 discloses an adapter for enabling a tape cartridge or cassette to be played on a gramophone.

According to the present invention there is provided a magnetic tape cartridge comprising:
a cartridge casing acceptable in a disc drive;
a magnetic tape suitable for transferring data between a recording track formed thereon and a disc drive head;
means for storing said tape;
means for registering a portion of said tape at a location at which data can be transferred between said tape and said disc drive head, said registering means including a recess in said cartridge casing for receiving the conical top of a positioning pin of said disc drive, and being effective to position said tape with respect to said disc drive head so that said tape is positioned at a predetermined distance from a rotational axis of said disc drive about which a magnetic disc would rotate; and a tape driving mechanism for driving said tape.

Thus, an embodiment of disc-drive-compatible magnetic tape cartridge according to the present invention is provided with a registering means or tape guide for accurately positioning the tape in relation to a disc drive head. The tape guide may include a positioning section or member to be aligned with a rotational axis of a centre core assembly when the centre core assembly is chucked on a turntable of the disc drive. The tape guide may also include a guide section or member defining a tape run path across the disc drive head. The guide section may be formed integrally with the positioning section to be aligned with the centre core assembly, and is so distanced from the latter as accurately to position the tape with respect to the disc drive head.

As will be appreciated, since in such an embodiment the distance between the positioning section and the guide section is maintained precisely constant, tracking by the disc drive head becomes easier, so allowing high-density recording.

The invention will now be described by way of example with reference to the accompanying drawings, throughout which like parts are referred to by like references, and in which:

Figure 1 is a perspective view of an embodiment of disc-drive-compatible magnetic tape cartridge according to the present invention;

Figure 2 is a perspective view of the embodiment of Figure 1, as viewed from the bottom;

Figure 3 is a plan view of the embodiment of Figure 1, in which a portion of an upper half of the cartridge is removed to show a tape drive mechanism;

Figure 4 is an enlarged longitudinal section of a portion of the embodiment of Figure 1 with the tape drive mechanism, which section is taken along line IV-IV of Figure 3;

Figure 5 is an enlarged section taken along line V-V of Figure 3, where a centre core assembly and a tape guide are provided;

Figure 6 is a perspective view of the tape guide;

Figure 7 is a plan view of the tape guide of Figure 6; and

Figure 8 is a partial plan view of a modified tape guide.

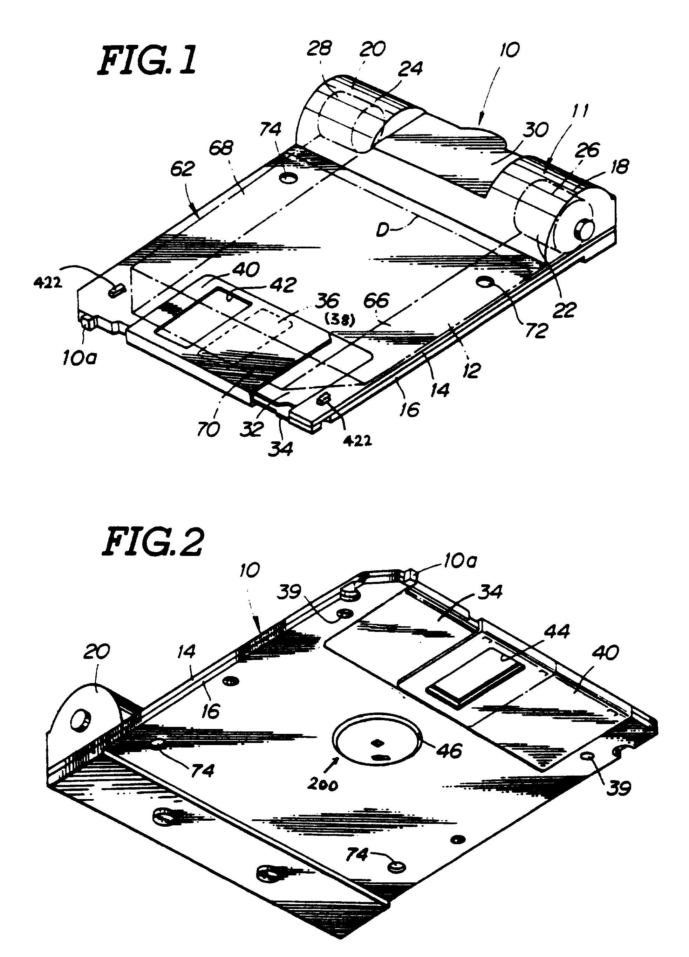

Referring now to Figures 1 to 3, the embodiment of magnetic tape cartridge 10 is formed in a thin, rectangular-box-shaped configuration, which is compatible with a disc drive for floppy discs of corresponding size, such as 3.5 inch (approximately 89 mm) microfloppy discs of the type disclosed in US-A-4 445 155. However, it should be appreciated that the present invention is applicable to magnetic tape cartridges compatible with disc drives of any size. Furthermore, although the magnetic tape cartridge described below employs a magnetic tape having two ends respectively wound around supply and take-up reels, the invention is also applicable to an endless-loop-type tape cartridge.

A magnetic tape 12 is housed within the cartridge 10. The cartridge 10 is made up of an upper half 14 and a lower half 16. The halves 14 and 16 are of equal size in plan view and are fixed to each other to form the cartridge 10. The cartridge 10 is of substantially the same size and shape as the microfloppy disc cartridge disclosed in US-A-4 445 155, but is longer than that disc cartridge. The length of the normal disc cartridge is illustrated by the line D in Figure 1. Thus, the cartridge 10 has an extra section 11 which accommodates the tape reels, the tape drive mechanism and so forth. When the cartridge 10 is loaded into a disc drive for which it is designed, the extra section 11 will remain outside of the disc drive, protruding from the opening of the disc drive.

The cartridge 10 is further formed with a projection 10a projecting from the front end of the cartridge 10. The projection 10a serves as an indicator for making the disc drive recognize that the cartridge 10 is used.

However, it would be possible to make the cartridge 10 match the floppy disc cartridge not only in width and thickness, but also in length, if necessary.

The upper half 14 has semi-cylindrical hollow extensions 18 and 20 near its rear corners and along its rear edge ('rear' referring to the direction of insertion into the disc drive). The extensions 18 and 20 extend upwards from the upper surface of the upper half 14 and thus define tape reel recesses 22 and 24 receiving a supply reel 26 and a take-up reel 28. A space 30 for a power train, which will be described in detail later, remains between the tape reel recesses 22 and 24.

The halves 14 and 16 have recesses 32 and 34 exposed to the outside on their upper and lower surfaces respectively. Longitudinally (with respect to the direction of insertion) elongated tape access apertures 36 and 38 are formed in the halves 14 and 16 within the recesses 32 and 34. The tape access apertures 36 and 38 are aligned with each other to allow a disc drive head (not shown) of a disc drive access to the tape 12. The disc drive can be the same as or slightly modified from that disclosed in US-A-4 445 155.

The lower half 16 also has positioning holes 39 for positioning the cartridge 10 within the disc drive. The positioning holes 39 receive positioning pins (not shown) built into the disc drive.

A sliding shutter 40, shown closed in Figure 1 and open in Figure 2, slidingly engages the recesses 32 and 34. Upper and lower surfaces of the shutter 40 lie flush with the upper and lower surfaces of the cartridge 10 as assembled. The shutter 40 has longitudinally elongated apertures 42 and 44 of the same size and configuration as the tape access apertures 36 and 38 of the cartridge 10. The shutter 40 is movable between the closed position, in which the apertures 42 and 44 are offset from the tape access apertures 36 and 38 and the tape 12 is hidden, and the open position, in which the apertures 42 and 44 are aligned with the tape access apertures 36 and 38 to allow the disc drive head access to the tape 12. The sliding shutter 40 is normally biased by a spring (not shown) towards the closed position, and is actuated to the open position when the cartridge 10 is inserted into the disc drive.

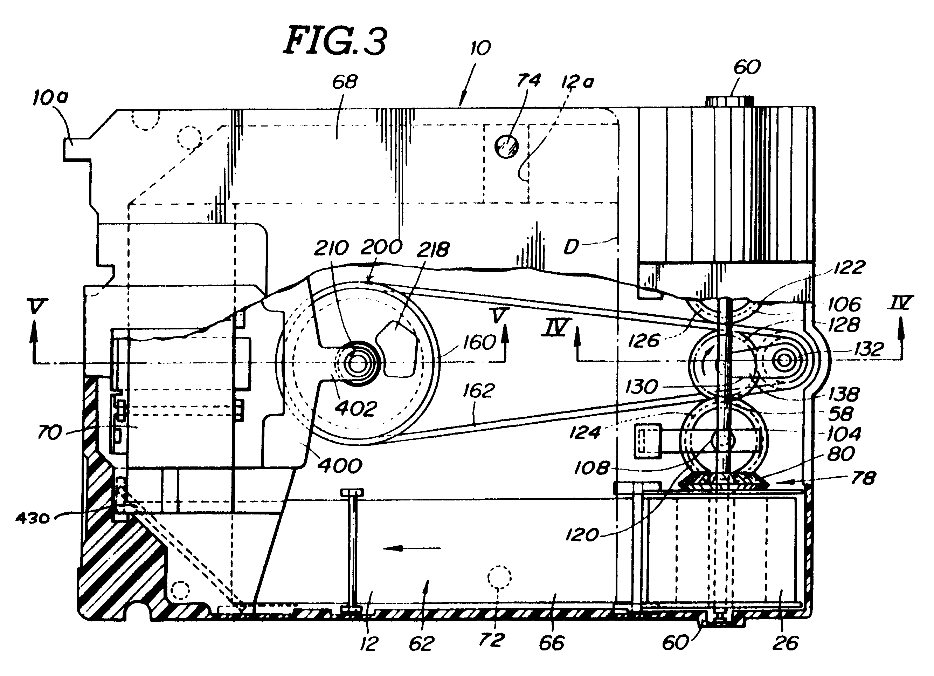

The supply and take-up reels 26 and 28 are rotatably supported by a support shaft 58, the ends of which are fixed to boss sections 60 formed on the side walls of the extensions 18 and 20 as shown in Figure 3. Therefore, the reels 26 and 28 are mounted within the tape reel recesses 22 and 24 with their axes lying transversely. A tape run path 62 is defined within the thin space defined in the front portion of the cartridge 10 along which the tape 12 passes between the tape access apertures 36 and 38. Tape guides or bars 430 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38. At the junctures of the first section 66 and third section 70, and of the second section 68 and third section 70, the tape guides 430 are provided to deflect the tape 12.

In this description, the word 'longitudinal' used in connection with the tape path, means the axis of movement along the first and second sections 66 and 68 of the tape run path 62, and the word 'lateral' used in connection with the tape path, means the axis of movement along the third section 70 of the tape run path 62.

In order selectively to drive the supply reel 26 and the take-up reel 28 for recording and/or reproduction in forward and reverse directions, the cartridge 10 is provided with a specially designed tape drive mechanism. In general, the take-up reel 28 is driven to extract the tape 12 from the supply reel 26 through the tape run path 62 during recording and reproduction. This tape direction will be hereafter referred to as 'forward'. On the other hand, the supply reel 26 must be driven to extract the tape 12 from the take-up reel 28 during rewinding. The supply reel 26 drives the tape 12 through the tape run path 62 in the direction opposite to the forward direction. This direction will hereafter be referred to as 'reverse'.

The tape drive mechanism includes a pair of bevel gear blocks 78 (only one is seen) as shown in Figure 3. The bevel gear blocks 78 are generally cylindrical and have bevel gears 80 respectively at one end thereof. The bevel gear blocks 78 are coaxially mounted on the mutually opposing axial ends of the supply reel 26 and the take-up reel 28. The bevel gear blocks 78 are rotatable with the supply reel 26 and the take-up reel 28.

A pair of intermediate gear blocks 104 and 106 are rotatably supported by gear shafts 108 extending vertically from the floor of the cartridge 10. The gear shafts 108 are arranged in lateral alignment at a given distance from each other. The distance between the gear shafts 108 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 constantly engage the corresponding bevel gears 80.

The intermediate gear blocks 104 and 106 also have plane gears 124 and 126 below the bevel gears 120 and 122. The plane gears 124 and 126 lie in the same horizontal plane at a given distance from each other. Since the gear shafts 108 are separated by a distance slightly greater than or approximately equal to the outer diameter of the intermediate gear blocks 104 and 106, the distance between the plane gears 124 and 126 is slightly greater than the outer diameter thereof.

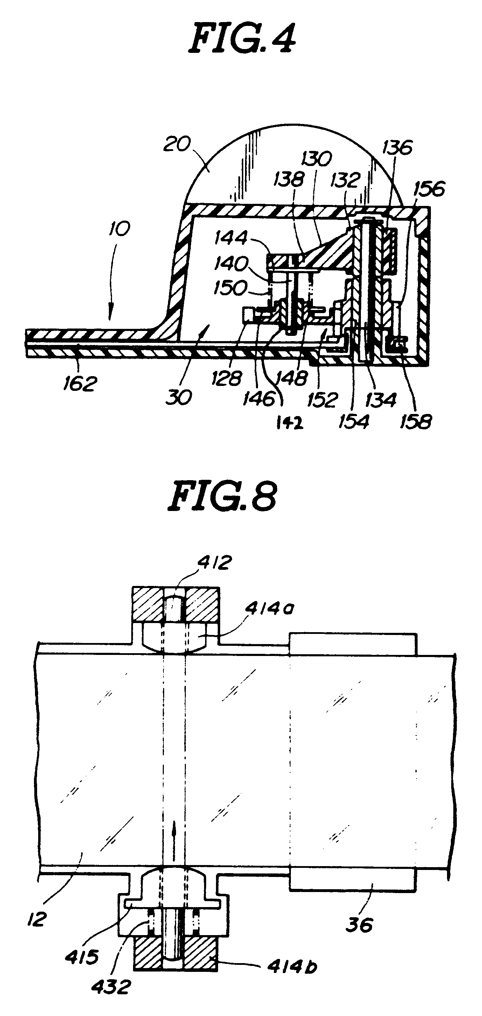

As shown in Figure 4, a two-way coupling gear 128 is disposed between the plane gears 124 and 126. The two-way coupling gear 128 is mounted on a pivotal base 130. The pivotal base 130 has a cylindrical base section 132 pivotably mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downward from the pivoting arm 138. Adjacent to its lower end, the gear shaft 140 carries the two-way coupling gear 128. The two-way coupling gear 128 is rotatable about the gear shaft 140. A sleeve bearing 142 is disposed between the contacting faces of the gear shaft 140 and the two-way coupling gear 128.

An annular slip plate 144 loosely engages the gear shaft 140 for the two-way coupling gear 128.

Also, an annular-disc-shaped spring seat 146 engages the stepped outer periphery 148 of the two-way coupling gear 128. A compression coil spring 150 is disposed between the slip plate 144 and the spring seat 146 to exert a biasing spring force on the slip plate 144 for frictional engagement with the lower surface of the pivoting arm 138. At the same time, the spring force of the coil spring 150 is exerted on the two-way coupling gear 128 through the spring seat 146. The slip plate 144 and the coil spring 150 form a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way gear 128.

A drive gear block 152 is mounted at the lower end of the pivot shaft 134 through a sleeve bearing 154. The drive gear block 152 has a drive gear 156 constantly engaging the two-way coupling gear 128. The drive gear block 152 also has a pulley 158 integrally formed with the drive gear 156. The pulley 158 is connected to a pulley 160 integral with a centre core disc 202 of a centre core assembly 200, which will be described later, by means of a driving belt 162.

It should be appreciated that the gear ratio of the aforementioned tape drive mechanism is selected so as to drive the tape 12 at a speed equal to the rotational speed of a floppy disc on the same disc drive. Specifically, the tape speed at the third section 70 of the tape run path 62 has to be equal to the rotational speed of a floppy disc, so that the disc drive can use the same recording and reproduction operations without adjustment.

For a conventional 3.5 inch (approximately 89 mm) floppy disc, rotation is at about 600 r.p.m. so as to be free of peak-shift errors and data drop-out. Therefore, if it is assumed that the linear velocity of the outermost track is V1 and that of the innermost track is V2, it is favourable that the feed rate V of the tape 12 be V2<V<V1.

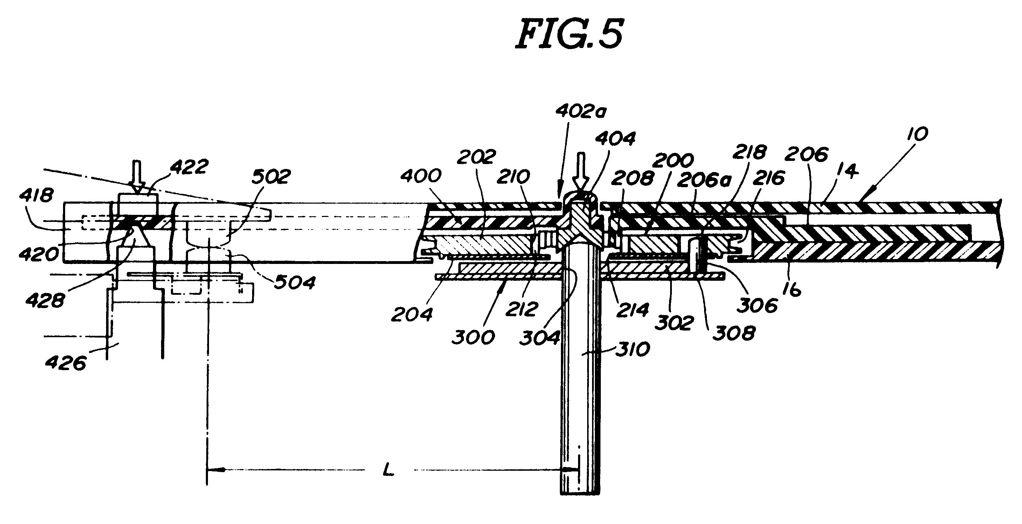

In order drivingly to couple the tape cartridge 10 to a disc drive, a chucking mechanism is provided. Referring in particular to Figure 5, the chucking mechanism comprises the centre core assembly 200 in the cartridge 12 and a turn-table assembly 300 in the disc drive. The centre core assembly 200 is exposed through a central aperture 46 formed in the lower half 16 of the cartridge 10. The centre core assembly 200 comprises the centre core disc 202 which is rotatably mounted on a support plate 206 which is fixed to the upper surface of the lower half 16. The support plate 206 has a C-shaped end section 206a which defines a recess for receiving a part of the centre core disc 202. The centre core disc 202 is rotatably supported in the C-shaped end section 206a of the support plate 206 through a bearing 208, such as an oil-less metal bearing. In order to establish bearing contact with the outer periphery of the bearing 208, a oil-less metal bearing 212 in generally cylindrical form, is fixed into a centre positioning aperture 210 of the centre core disc 202. The bearings 208 and 212 are loosely coupled with each other for allowing the centre core disc 202 with the bearing 212 to displace with respect to the bearing 208 while it is chucked onto a turntable 302 of a driving mechanism of the disc drive, which driving mechanism will be described later.

The centre core disc 202 opposes the central aperture 46 in the lower half 16 and is thus exposed through the central aperture 46 of the lower half 16. The centre core disc 202 is formed in an H-shaped configuration in cross-section and thus comprises an annular-disc form main section, as clearly shown in Figure 5. The pulley 160 is integrally formed with the centre core disc 202 by forming a V-shaped groove 216 on the outer periphery.

The centre core disc 202 also defines a recess at the underside thereof. A driven plate 204 is received within the recess and fixed to the centre core disc 202 for rotation therewith. The driven plate 204 is formed with a centre positioning aperture 214 and a driving and positioning aperture 218. The driving and position aperture 218 is offset by a given distance from the centre positioning aperture 210. The centre positioning aperture 210 is designed to engage a disc drive motor spindle 310 through a metal fitting 404 which is fixedly mounted on a tape guide 400 which will be described later. On the other hand, the driving and positioning aperture 218 is designed to engage a driving pin 306 mounted on the turntable 302 of the disc drive through a resilient leaf spring 308. The driving pin 306 is fixed to the leaf spring 308 and is normally biased upwardly. Therefore, the driving pin 306 extends upwardly through an aperture formed through the turntable 302 to engage with the driving and positioning aperture 218 of the centre core disc 202. On the other hand, the turntable 302 is driven to rotate by the motor spindle 310. Therefore, the centre core disc 202 is driven to rotate by the driving force transmitted through the turntable 302 of the disc drive with engagement of the driving and positioning aperture 218 and the driving pin 306 in known manner. In order to establish chucking engagement between the driving pin 306 and the driving and positioning aperture 218, the leaf spring 308 is rotatingly biased by means of a bias coil spring.

As will be appreciated, when the tape 12 is to be driven, the driving pin 306 of the turntable 302 establishes clutching engagement with the driving and positioning aperture 218 of the driven plate 204 for rotatingly driving the centre core disc 202, by contacting the periphery thereof against the peripheral edges in the vicinity of a corner of the driving and positioning aperture 218.

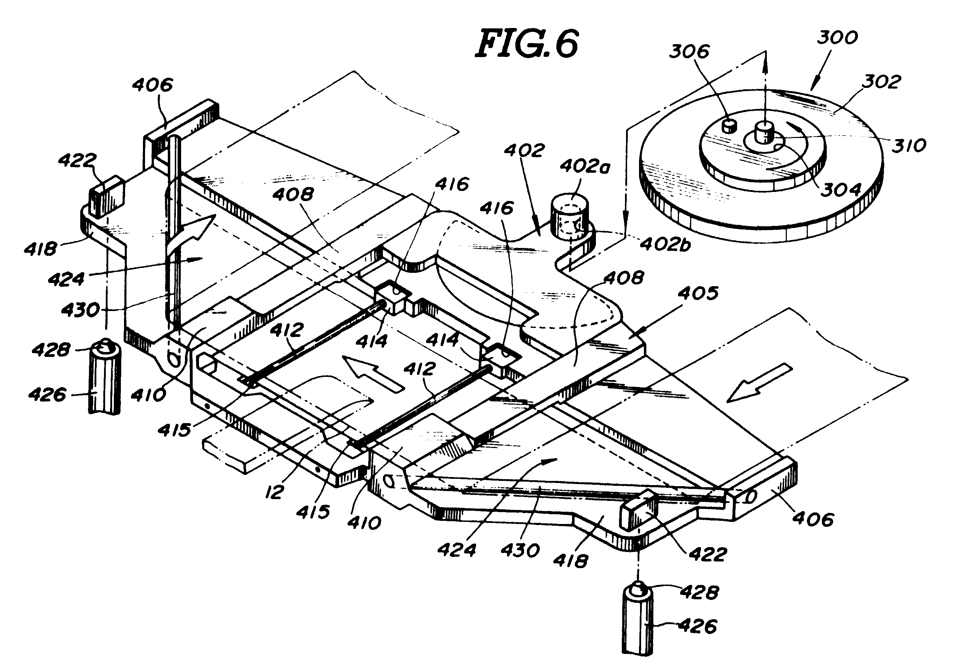

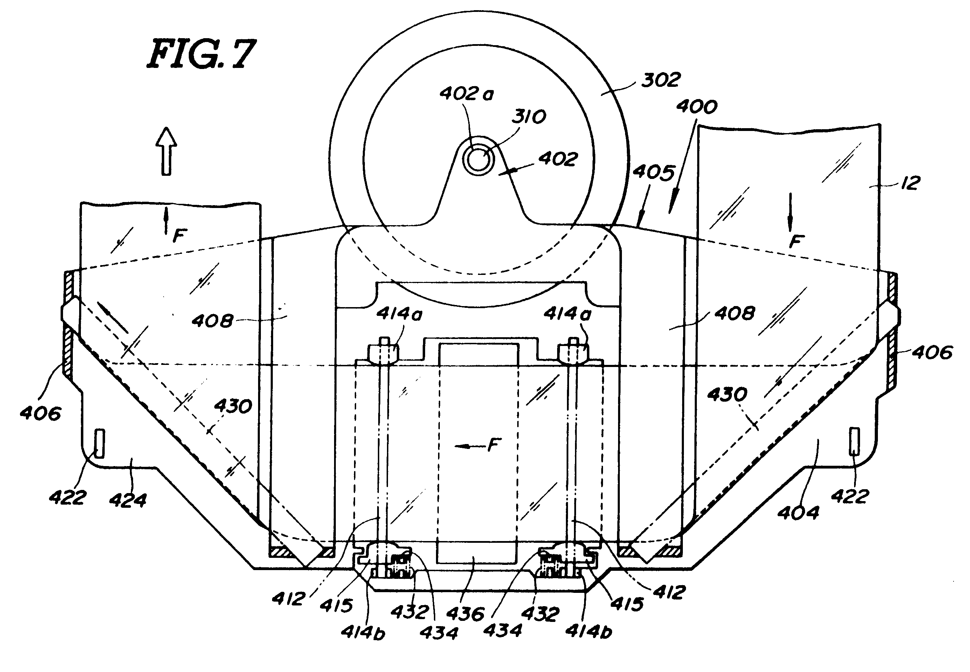

The tape guide 400, shown in detail in Figures 6 and 7, is provided for guiding the tape 12 and defining the section 70 of the tape run path 62 across disc drive heads 502 and 504 (shown in Figure 5). The tape guide 400 has a positioning section 402 to be aligned with the rotational axis of the centre core disc 202 of the centre core assembly 200. The positioning section 402 has a hollow cylindrical extension 402a defining a recess 402b. An upper end section of the metal fitting 404 is received within the recess 402b. The positioning section 402 is connected to a guide section 405 which defines the section 70 of the tape run path 62.

The guide section 405 has longitudinally extending and upwardly protruded sections 408. The sections 408 are integrally formed with blocks 410 for receiving the ends of the tape guides 430. The other ends of the tape guides 430 are secured to upward extensions 406 upwardly extended from the longitudinal side edge of the guide section 405. The tape guides 430 are arranged across sections 424 defined outside of the sections 408, and extend obliquely with respect to the longitudinally extending sections 66 and 68 of the tape run path 62, and the laterally extending section 70. The tape 12 is wrapped around the tape guides 430 in order to turn the running direction from the longitudinal direction to the lateral direction, and from the lateral direction to the longitudinal direction. Between the sections 408, another set of tape guides or bars 412 are provided to define the tape plane. The tape guides 412 extend in the longitudinal direction and fit fitting blocks 414a at the ends adjacent to the positioning sections 402. Fitting blocks 414b are also fixedly fitted to the other ends of the tape guides 412. Adjacent to the fitting blocks 414b remote from the positioning section 402, movable fitting blocks 415 are movably fitted onto the other end of the tape guides 412. The movable fitting blocks 415 are normally biased towards the fitting blocks 414a by means of bias coil springs 432 contacting extensions 434 thereof. The movable fitting blocks 415 thereby constantly push the tape 12 towards the positioning section 402 resiliently to maintain the tape position with respect to the tape guide 400. Thus, the distance L from the rotational axis of the centre core disc 202 to the tape track to be accessed by one of the disc drive heads 502 and 504 can be maintained constant.

Triangular extensions 418 are formed with the sections 424. The extensions 418 are respectively formed with positioning recesses 420 to receive therein conical tops 428 of positioning pins 426 of the disc drive. Upwardly extending strips 422 are also protruded upwardly from the extensions 418. As shown in Figures 1 and 5, the strips 422 extend upwardly through apertures in the upper half 14 of the cartridge 10 so as to fix the position of the tape guide 400 with respect to the upper half 14 of the cartridge 10.

Upon loading the cartridge 10, a pusher member (not shown) in the disc drive depresses the top of the cylindrical extension 402a downwardly as indicated by the arrow in Figure 5. As a result, the metal fitting 404 comes into engagement with the top of the motor spindle 310 of the disc drive. At the same time, the upper edges of the strips 422 are depressed by other pusher members (not shown) of the disc drive to establish engagement between the recesses 420 and the conical tops 428 of the positioning pins 426. By these operations, the tape guide 400 is accurately positioned with respect to the disc drive heads 502 and 504 to maintain the predetermined distance L between the recording track thereon and the rotational axis of the motor spindle 310. Since tracking of the disc drive heads 502 and 504 is radially performed with respect to the rotational axis of the motor spindle 310, tracking with respect to the tape 12 positioned as set forth above, becomes accurate enough to allow high-density recording.

In order to drive the tape 12 forward (from the supply reel 26 onto the take-up reel 28), the turntable 302 is driven clockwise in Figure 3. With clockwise rotation of the turntable 302, the centre core disc 202 is driven clockwise. The clockwise rotational force is transmitted from the pulley 160 of the centre core disc 202 to the pulley 158 of the drive gear block 152 through the driving belt 162. Therefore, the drive gear 156 is driven to rotate clockwise in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130, due to the spring force of the coil spring 150. Therefore, the rotational force transmitted by the drive gear 156 of the drive gear block 52 to the two-way coupling gear 128 serves to drive the pivotal base 130 to pivot clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the spring force of the coil spring 150 and so causes slip between the mating surfaces of the slip plate 144 and pivoting arm 138. As a result, the two-way coupling gear 128 starts to rotate counter-clockwise, thereby driving the plane gear 126 of the intermediate gear clockwise. The bevel gear 122 of the intermediate gear block 106 thus rotates clockwise, which causes the bevel gear 76 to drive the take-up reel 28 to wind in the tape 12.

When the cartridge 10 is unloaded and released from the disc drive, or otherwise, the turntable 302 of the disc drive is forcibly stopped, coil springs (not shown) serve to restrict rotation of the intermediate gear blocks 104 and 106. Since the bevel gears 120 and 122 of the intermediate gear blocks 104 and 106 are constantly engaged with the bevel gears 80 and 82, rotation of the supply reel 26 and the take-up reel 28 is also restricted by means of these coil springs. Therefore, even when release of the cartridge 10 from the turntable 302 of the disc drive is stopped abruptly, slackening of the tape 12 due to over-running of the tape reel 26 or 28 is prevented.

On the other hand, in order to switch from forward to reverse, the direction of rotation of the turntable 302 is switched from clockwise to counter-clockwise as viewed in Figure 3. With counter-clockwise rotation of the turntable 302, the centre core disc 202 is driven counter-clockwise. The counter-clockwise rotational force is transmitted from the pulley 160 of the centre core disc 202 to the pulley 158 of the drive gear block 152 through the driving belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the spring force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base 130 to pivot counter-clockwise in Figure 3.

Once the two-way coupling gear 128 comes into engagement with the plane gear 124 of the intermediate gear block 104, pivotal movement of the pivotal base 130 is restricted. Then, the rotational driving force transmitted by the drive gear 156 to the two-way coupling gear 128 overcomes the spring force of the coil spring 150, causing slip between the mating surfaces of the slip plate 144 and the pivoting arm 138. As a result, the two-way coupling gear 128 starts to rotate clockwise, thus driving the plane gear 124 of the intermediate gear 104 counter-clockwise. The bevel gear 120 of the intermediate gear block 104 is thus rotated clockwise, causing the bevel gear 74 to drive the supply reel 26 to rewind the tape 12.

In the embodiment, magnetic tape 12 three-quarters inch (approximately 19 mm) wide is employed in the cartridge 10. In this case, eighty recording tracks can be formed, which corresponds to the number that can be formed on a 3.5 inch (approximately 89 mm) floppy disc. Each track formed on the tape 12 extends longitudinally along the tape 12. It will be appreciated that the length of each track depends solely on the length of the tape 12, and so can be substantially longer than the length of the recording tracks formed on a 3.5 inch (approximately 89 mm) floppy disc. In general, the capacity of each track on the tape 12 will be several tens of times greater than that of a track on a floppy disc. If the tape 12 is 12 m long, the capacity of the cartridge 10 will be approximately 20 megabytes.

Although the embodiment described employs coil springs 432 offset from the tape guides 412 for biasing the movable fitting blocks 415 towards the positioning section 402 through the extension 434, for resiliently maintaining the tape 12 at a predetermined position, it would be possible to wind the coil springs 432 around the guide bars 412, as shown in Figure 8. In this case, the movable fitting 415 receives one end of the coil spring 432 at the end adjacent to the fitting block 414b. The other end of the coil spring 432 is seated on the fitting block 414b.

As will be appreciated herefrom, in the embodiment, tracking of the disc drive head is easy. As a result, high-density recording becomes possible, and the magnetic tape can be tracked by means of tracking mechanisms as usually employed in disc drives.

Such an embodiment can provide a very large data storage capacity, and is suitable for use as back-up storage for hard-discs or floppy discs. Furthermore, it can be utilized in a filing system which requires high-capacity memory media. In addition, the embodiment can have functions such as automatically stopping the tape drive at the tape ends and/or of automatically reversing the tape driving direction.

The present invention is applicable to any type of magnetic tape cartridge compatible with disc drives.

**Description for the contracting state : ES**

This invention relates to magnetic tape cartridges.

Various magnetic discs and disc drives have been proposed for storing data. For example, US patent US-A-4 445 155 discloses a typical microfloppy disc, that is a 3.5 inch (approximately 89 mm) floppy disc, and a disc drive therefor. The floppy disc is in the form of a floppy disc cartridge (or cassette) generally comprising a flexible magnetic disc and a cartridge (or cassette) casing. The flexible disc includes a centre core disc designed to be chucked on a turntable of the disc drive which rotates the flexible disc through the centre core disc.

Such floppy discs permit fast access. However, floppy discs have a limited data storage capacity, and archival or back-up storage of data stored on a hard disc generally requires twenty to eighty floppy discs. This involves substantial expense.

On the other hand, magnetic tapes have a much larger storage capacity than floppy discs, but are inconvenient when fast access to data is required. In other words, when fast access is not required, magnetic tapes are useful because of their large storage capacity. Therefore, as back-up storage for hard discs, magnetic tapes should be regarded as a useful and convenient medium to use.

In order to record and reproduce data on or from magnetic tapes, a so-called 'data recorder' magnetic tape recording and reproducing apparatus is used, whereas recording and reproduction of data on and from magnetic discs is performed using a disc drive. Consequently, to use magnetic tapes as back-up storage media, a data recorder and a disc drive are required, which is an additional expense.

So as to allow the use of magnetic tape for inexpensive back-up storage of data on hard discs or floppy discs, it would be beneficial to provide a magnetic tape cartridge compatible with floppy disc drives, so that it can be driven by the same drive unit. For this purpose, there has been proposed a disc-drive-compatible magnetic tape cartridge in Japanese patent first publication (Tokkai) 61/214188, published on 24 September 1986. This proposed magnetic tape cartridge can utilize the read/write head or heads of a disc drive to write data on and/or read data from a magnetic tape. The magnetic tape cartridge contains the tape, a mechanism to register the tape with respect to a location at which data are written on the tape or are read from the tape by the read/write head or heads of the disc drive, means for storing the tape, and a mechanism to feed the tape past the read/write head or heads. The magnetic tape cartridge has a portion having an external shape and size which allow that portion to be inserted into the disc drive to enable the tape to be placed in the vicinity of the read/write head or heads.

Such a magnetic tape cartridge is successful in making magnetic tape usable in a disc drive. However, a difficulty has arisen in attempting to achieve high-density recording on the tape. This results from difficulty in accurately positioning the tape with respect to the disc drive head. Namely, in the usual 3.5 inch (approximately 89 mm) floppy disc, the magnetic disc is precisely coaxially formed with a centre core disc. Therefore, by chucking the centre core disc onto a turntable of a disc drive, the floppy disc can be accurately positioned with respect to the disc drive head. Therefore, recording tracks on the floppy disc can be precisely positioned at respective predetermined positions for accurate tracking of the disc drive head. On the contrary, the above-mentioned magnetic tape cartridge has a centre core disc merely serving as a means for transmitting the driving force of a disc driving spindle motor to a tape drive mechanism. The tape run path is defined irrespective of the centre core disc. Therefore, the radial distance from the rotational axis of the centre core disc as chucked on the turntable of the disc drive, to each recording track on the tape is not predetermined. This makes it difficult accurately to track each recording track on the magnetic tape, so high-density recording is not possible, because of the unstable tape position with respect to the disc drive head.

Hewlett-Packard Company European patent specification EP-A2-0 195 571 (published 24 September 1986) and Sony Corporation European patent specification EP-A2-0 214 820 (published 18 March 1987) disclose magnetic tape cartridges of the general kind disclosed and claimed herein, but neither of the related applications designate Spain. US patent specification US-A-3 624 310 discloses an adapter for enabling a tape cartridge or cassette to be played on a gramophone.

According to the present invention there is provided a magnetic tape cartridge comprising:
a cartridge casing acceptable in a disc drive;
a magnetic tape suitable for transferring data between a recording track formed thereon and a disc drive head;
means for storing said tape;
means for registering a portion of said tape at a location at which data can be transferred between said tape and said disc drive head, said registering means positioning said tape with respect to said disc drive head so that said tape is positioned at a predetermined distance from a rotational axis of said disc drive about which a magnetic disc would rotate; and
means for feeding said tape past said location.

Thus, an embodiment of disc-drive-compatible magnetic tape cartridge according to the present invention is provided with a registering means or tape guide for accurately positioning the tape in relation to a disc drive head. The tape guide may include a positioning section or member to be aligned with a rotational axis of a centre core assembly when the centre core assembly is chucked on a turntable of the disc drive. The tape guide may also include a guide section or member defining a tape run path across the disc drive head. The guide section may be formed integrally with the positioning section to be aligned with the centre core assembly, and is so distanced from the latter as accurately to position the tape with respect to the disc drive head.

As will be appreciated, since in such an embodiment the distance between the positioning section and the guide section is maintained precisely constant, tracking by the disc drive head becomes easier, so allowing high-density recording.

The invention will now be described by way of example with reference to the accompanying drawings, throughout which like parts are referred to by like references, and in which:

Figure 1 is a perspective view of an embodiment of disc-drive-compatible magnetic tape cartridge according to the present invention;

Figure 2 is a perspective view of the embodiment of Figure 1, as viewed from the bottom;

Figure 3 is a plan view of the embodiment of Figure 1, in which a portion of an upper half of the cartridge is removed to show a tape drive mechanism;

Figure 4 is an enlarged longitudinal section of a portion of the embodiment of Figure 1 with the tape drive mechanism, which section is taken along line IV-IV of Figure 3;

Figure 5 is an enlarged section taken along line V-V of Figure 3, where a centre core assembly and a tape guide are provided;

Figure 6 is a perspective view of the tape guide;

Figure 7 is a plan view of the tape guide of Figure 6; and

Figure 8 is a partial plan view of a modified tape guide.

Referring now to Figures 1 to 3, the embodiment of magnetic tape cartridge 10 is formed in a thin, rectangular-box-shaped configuration, which is compatible with a disc drive for floppy discs of corresponding size, such as 3.5 inch (approximately 89 mm) microfloppy discs of the type disclosed in US-A-4 445 155. However, it should be appreciated that the present invention is applicable to magnetic tape cartridges compatible with disc drives of any size. Furthermore, although the magnetic tape cartridge described below employs a magnetic tape having two ends respectively wound around supply and take-up reels, the invention is also applicable to an endless-loop-type tape cartridge.

A magnetic tape 12 is housed within the cartridge 10. The cartridge 10 is made up of an upper half 14 and a lower half 16. The halves 14 and 16 are of equal size in plan view and are fixed to each other to form the cartridge 10. The cartridge 10 is of substantially the same size and shape as the microfloppy disc cartridge disclosed in US-A-4 445 155, but is longer than that disc cartridge. The length of the normal disc cartridge is illustrated by the line D in Figure 1. Thus, the cartridge 10 has an extra section 11 which accommodates the tape reels, the tape drive mechanism and so forth. When the cartridge 10 is loaded into a disc drive for which it is designed, the extra section 11 will remain outside of the disc drive, protruding from the opening of the disc drive.

The cartridge 10 is further formed with a projection 10a projecting from the front end of the cartridge 10. The projection 10a serves as an indicator for making the disc drive recognize that the cartridge 10 is used.

However, it would be possible to make the cartridge 10 match the floppy disc cartridge not only in width and thickness, but also in length, if necessary.

The upper half 14 has semi-cylindrical hollow extensions 18 and 20 near its rear corners and along its rear edge ('rear' referring to the direction of insertion into the disc drive). The extensions 18 and 20 extend upwards from the upper surface of the upper half 14 and thus define tape reel recesses 22 and 24 receiving a supply reel 26 and a take-up reel 28. A space 30 for a power train, which will be described in detail later, remains between the tape reel recesses 22 and 24.

The halves 14 and 16 have recesses 32 and 34 exposed to the outside on their upper and lower surfaces respectively. Longitudinally (with respect to the direction of insertion) elongated tape access apertures 36 and 38 are formed in the halves 14 and 16 within the recesses 32 and 34. The tape access apertures 36 and 38 are aligned with each other to allow a disc drive head (not shown) of a disc drive access to the tape 12. The disc drive can be the same as or slightly modified from that disclosed in US-A-4 445 155.

The lower half 16 also has positioning holes 39 for positioning the cartridge 10 within the disc drive. The positioning holes 39 receive positioning pins (not shown) built into the disc drive.

A sliding shutter 40, shown closed in Figure 1 and open in Figure 2, slidingly engages the recesses 32 and 34. Upper and lower surfaces of the shutter 40 lie flush with the upper and lower surfaces of the cartridge 10 as assembled. The shutter 40 has longitudinally elongated apertures 42 and 44 of the same size and configuration as the tape access apertures 36 and 38 of the cartridge 10. The shutter 40 is movable between the closed position, in which the apertures 42 and 44 are offset from the tape access apertures 36 and 38 and the tape 12 is hidden, and the open position, in which the apertures 42 and 44 are aligned with the tape access apertures 36 and 38 to allow the disc drive head access to the tape 12. The sliding shutter 40 is normally biased by a spring (not shown) towards the closed position, and is actuated to the open position when the cartridge 10 is inserted into the disc drive.

The supply and take-up reels 26 and 28 are rotatably supported by a support shaft 58, the ends of which are fixed to boss sections 60 formed on the side walls of the extensions 18 and 20 as shown in Figure 3. Therefore, the reels 26 and 28 are mounted within the tape reel recesses 22 and 24 with their axes lying transversely. A tape run path 62 is defined within the thin space defined in the front portion of the cartridge 10 along which the tape 12 passes between the tape access apertures 36 and 38. Tape guides or bars 430 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38. At the junctures of the first section 66 and third section 70, and of the second section 68 and third section 70, the tape guides 430 are provided to deflect the tape 12.

In this description, the word 'longitudinal' used in connection with the tape path, means the axis of movement along the first and second sections 66 and 68 of the tape run path 62, and the word 'lateral' used in connection with the tape path, means the axis of movement along the third section 70 of the tape run path 62.

In order selectively to drive the supply reel 26 and the take-up reel 28 for recording and/or reproduction in forward and reverse directions, the cartridge 10 is provided with a specially designed tape drive mechanism. In general, the take-up reel 28 is driven to extract the tape 12 from the supply reel 26 through the tape run path 62 during recording and reproduction. This tape direction will be hereafter referred to as 'forward'. On the other hand, the supply reel 26 must be driven to extract the tape 12 from the take-up reel 28 during rewinding. The supply reel 26 drives the tape 12 through the tape run path 62 in the direction opposite to the forward direction. This direction will hereafter be referred to as 'reverse'.

The tape drive mechanism includes a pair of bevel gear blocks 78 (only one is seen) as shown in Figure 3. The bevel gear blocks 78 are generally cylindrical and have bevel gears 80 respectively at one end thereof. The bevel gear blocks 78 are coaxially mounted on the mutually opposing axial ends of the supply reel 26 and the take-up reel 28.

The bevel gear blocks 78 are rotatable with the supply reel 26 and the take-up reel 28.

A pair of intermediate gear blocks 104 and 106 are rotatably supported by gear shafts 108 extending vertically from the floor of the cartridge 10. The gear shafts 108 are arranged in lateral alignment at a given distance from each other. The distance between the gear shafts 108 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 constantly engage the corresponding bevel gears 80.

The intermediate gear blocks 104 and 106 also have plane gears 124 and 126 below the bevel gears 120 and 122. The plane gears 124 and 126 lie in the same horizontal plane at a given distance from each other. Since the gear shafts 108 are separated by a distance slightly greater than or approximately equal to the outer diameter of the intermediate gear blocks 104 and 106, the distance between the plane gears 124 and 126 is slightly greater than the outer diameter thereof.

As shown in Figure 4, a two-way coupling gear 128 is disposed between the plane gears 124 and 126. The two-way coupling gear 128 is mounted on a pivotal base 130. The pivotal base 130 has a cylindrical base section 132 pivotably mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downward from the pivoting arm 138. Adjacent to its lower end, the gear shaft 140 carries the two-way coupling gear 128. The two-way coupling gear 128 is rotatable about the gear shaft 140. A sleeve bearing 142 is disposed between the contacting faces of the gear shaft 140 and the two-way coupling gear 128.

An annular slip plate 144 loosely engages the gear shaft 140 for the two-way coupling gear 128. Also, an annular-disc-shaped spring seat 146 engages the stepped outer periphery 148 of the two-way coupling gear 128. A compression coil spring 150 is disposed between the slip plate 144 and the spring seat 146 to exert a biasing spring force on the slip plate 144 for frictional engagement with the lower surface of the pivoting arm 138. At the same time, the spring force of the coil spring 150 is exerted on the two-way coupling gear 128 through the spring seat 146. The slip plate 144 and the coil spring 150 form a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way gear 128.

A drive gear block 152 is mounted at the lower end of the pivot shaft 134 through a sleeve bearing 154. The drive gear block 152 has a drive gear 156 constantly engaging the two-way coupling gear 128. The drive gear block 152 also has a pulley 158 integrally formed with the drive gear 156. The pulley 158 is connected to a pulley 160 integral with a centre core disc 202 of a centre core assembly 200, which will be described later, by means of a driving belt 162.

It should be appreciated that the gear ratio of the aforementioned tape drive mechanism is selected so as to drive the tape 12 at a speed equal to the rotational speed of a floppy disc on the same disc drive. Specifically, the tape speed at the third section 70 of the tape run path 62 has to be equal to the rotational speed of a floppy disc, so that the disc drive can use the same recording and reproduction operations without adjustment.

For a conventional 3.5 inch (approximately 89 mm) floppy disc, rotation is at about 600 r.p.m. so as to be free of peak-shift errors and data drop-out. Therefore, if it is assumed that the linear velocity of the outermost track is V1 and that of the innermost track is V2, it is favourable that the feed rate V of the tape 12 be V2<V<V1.

In order drivingly to couple the tape cartridge 10 to a disc drive, a chucking mechanism is provided. Referring in particular to Figure 5, the chucking mechanism comprises the centre core assembly 200 in the cartridge 12 and a turn-table assembly 300 in the disc drive. The centre core assembly 200 is exposed through a central aperture 46 formed in the lower half 16 of the cartridge 10. The centre core assembly 200 comprises the centre core disc 202 which is rotatably mounted on a support plate 206 which is fixed to the upper surface of the lower half 16. The support plate 206 has a C-shaped end section 206a which defines a recess for receiving a part of the centre core disc 202. The centre core disc 202 is rotatably supported in the C-shaped end section 206a of the support plate 206 through a bearing 208, such as an oil-less metal bearing. In order to establish bearing contact with the outer periphery of the bearing 208, a oil-less metal bearing 212 in generally cylindrical form, is fixed into a centre positioning aperture 210 of the centre core disc 202. The bearings 208 and 212 are loosely coupled with each other for allowing the centre core disc 202 with the bearing 212 to displace with respect to the bearing 208 while it is chucked onto a turntable 302 of a driving mechanism of the disc drive, which driving mechanism will be described later.

The centre core disc 202 opposes the central aperture 46 in the lower half 16 and is thus exposed through the central aperture 46 of the lower half 16. The centre core disc 202 is formed in an H-shaped configuration in cross-section and thus comprises an annular-disc form main section, as clearly shown in Figure 5. The pulley 160 is integrally formed with the centre core disc 202 by forming a V-shaped groove 216 on the outer periphery.

The centre core disc 202 also defines a recess at the underside thereof. A driven plate 204 is received within the recess and fixed to the centre core disc 202 for rotation therewith. The driven plate 204 is formed with a centre positioning aperture 214 and a driving and positioning aperture 218. The driving and position aperture 218 is offset by a given distance from the centre positioning aperture 210. The centre positioning aperture 210 is designed to engage a disc drive motor spindle 310 through a metal fitting 404 which is fixedly mounted on a tape guide 400 which will be described later. On the other hand, the driving and positioning aperture 218 is designed to engage a driving pin 306 mounted on the turntable 302 of the disc drive through a resilient leaf spring 308. The driving pin 306 is fixed to the leaf spring 308 and is normally biased upwardly. Therefore, the driving pin 306 extends upwardly through an aperture formed through the turntable 302 to engage with the driving and positioning aperture 218 of the centre core disc 202. On the other hand, the turntable 302 is driven to rotate by the motor spindle 310. Therefore, the centre core disc 202 is driven to rotate by the driving force transmitted through the turntable 302 of the disc drive with engagement of the driving and positioning aperture 218 and the driving pin 306 in known manner. In order to establish chucking engagement between the driving pin 306 and the driving and positioning aperture 218, the leaf spring 308 is rotatingly biased by means of a bias coil spring.

As will be appreciated, when the tape 12 is to be driven, the driving pin 306 of the turntable 302 establishes clutching engagement with the driving and positioning aperture 218 of the driven plate 204 for rotatingly driving the centre core disc 202, by contacting the periphery thereof against the peripheral edges in the vicinity of a corner of the driving and positioning aperture 218.

The tape guide 400, shown in detail in Figures 6 and 7, is provided for guiding the tape 12 and defining the section 70 of the tape run path 62 across disc drive heads 502 and 504 (shown in Figure 5). The tape guide 400 has a positioning section 402 to be aligned with the rotational axis of the centre core disc 202 of the centre core assembly 200. The positioning section 402 has a hollow cylindrical extension 402a defining a recess 402b.

An upper end section of the metal fitting 404 is received within the recess 402b. The positioning section 402 is connected to a guide section 405 which defines the section 70 of the tape run path 62.

The guide section 405 has longitudinally extending and upwardly protruded sections 408. The sections 408 are integrally formed with blocks 410 for receiving the ends of the tape guides 430. The other ends of the tape guides 430 are secured to upward extensions 406 upwardly extended from the longitudinal side edge of the guide section 405. The tape guides 430 are arranged across sections 424 defined outside of the sections 408, and extend obliquely with respect to the longitudinally extending sections 66 and 68 of the tape run path 62, and the laterally extending section 70. The tape 12 is wrapped around the tape guides 430 in order to turn the running direction from the longitudinal direction to the lateral direction, and from the lateral direction to the longitudinal direction. Between the sections 408, another set of tape guides or bars 412 are provided to define the tape plane. The tape guides 412 extend in the longitudinal direction and fit fitting blocks 414a at the ends adjacent to the positioning sections 402. Fitting blocks 414b are also fixedly fitted to the other ends of the tape guides 412. Adjacent to the fitting blocks 414b remote from the positioning section 402, movable fitting blocks 415 are movably fitted onto the other end of the tape guides 412. The movable fitting blocks 415 are normally biased towards the fitting blocks 414a by means of bias coil springs 432 contacting extensions 434 thereof. The movable fitting blocks 415 thereby constantly push the tape 12 towards the positioning section 402 resiliently to maintain the tape position with respect to the tape guide 400. Thus, the distance L from the rotational axis of the centre core disc 202 to the tape track to be accessed by one of the disc drive heads 502 and 504 can be maintained constant.

Triangular extensions 418 are formed with the sections 424. The extensions 418 are respectively formed with positioning recesses 420 to receive therein conical tops 428 of positioning pins 426 of the disc drive. Upwardly extending strips 422 are also protruded upwardly from the extensions 418. As shown in Figures 1 and 5, the strips 422 extend upwardly through apertures in the upper half 14 of the cartridge 10 so as to fix the position of the tape guide 400 with respect to the upper half 14 of the cartridge 10.

Upon loading the cartridge 10, a pusher member (not shown) in the disc drive depresses the top of the cylindrical extension 402a downwardly as indicated by the arrow in Figure 5. As a result, the metal fitting 404 comes into engagement with the top of the motor spindle 310 of the disc drive. At the same time, the upper edges of the strips 422 are depressed by other pusher members (not shown) of the disc drive to establish engagement between the recesses 420 and the conical tops 428 of the positioning pins 426. By these operations, the tape guide 400 is accurately positioned with respect to the disc drive heads 502 and 504 to maintain the predetermined distance L between the recording track thereon and the rotational axis of the motor spindle 310. Since tracking of the disc drive heads 502 and 504 is radially performed with respect to the rotational axis of the motor spindle 310, tracking with respect to the tape 12 positioned as set forth above, becomes accurate enough to allow high-density recording.

In order to drive the tape 12 forward (from the supply reel 26 onto the take-up reel 28), the turntable 302 is driven clockwise in Figure 3. With clockwise rotation of the turntable 302, the centre core disc 202 is driven clockwise. The clockwise rotational force is transmitted from the pulley 160 of the centre core disc 202 to the pulley 158 of the drive gear block 152 through the driving belt 162. Therefore, the drive gear 156 is driven to rotate clockwise in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130, due to the spring force of the coil spring 150. Therefore, the rotational force transmitted by the drive gear 156 of the drive gear block 52 to the two-way coupling gear 128 serves to drive the pivotal base 130 to pivot clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the spring force of the coil spring 150 and so causes slip between the mating surfaces of the slip plate 144 and pivoting arm 138. As a result, the two-way coupling gear 128 starts to rotate counterclockwise, thereby driving the plane gear 126 of the intermediate gear clockwise. The bevel gear 122 of the intermediate gear block 106 thus rotates clockwise, which causes the bevel gear 76 to drive the take-up reel 28 to wind in the tape 12.

When the cartridge 10 is unloaded and released from the disc drive, or otherwise, the turntable 302 of the disc drive is forcibly stopped, coil springs (not shown) serve to restrict rotation of the intermediate gear blocks 104 and 106. Since the bevel gears 120 and 122 of the intermediate gear blocks 104 and 106 are constantly engaged with the bevel gears 80 and 82, rotation of the supply reel 26 and the take-up reel 28 is also restricted by means of these coil springs. Therefore, even when release of the cartridge 10 from the turntable 302 of the disc drive is stopped abruptly, slackening of the tape 12 due to over-running of the tape reel 26 or 28 is prevented.

On the other hand, in order to switch from forward to reverse, the direction of rotation of the turntable 302 is switched from clockwise to counter-clockwise as viewed in Figure 3. With counter-clockwise rotation of the turntable 302, the centre core disc 202 is driven counter-clockwise. The counter-clockwise rotational force is transmitted from the pulley 160 of the centre core disc 202 to the pulley 158 of the drive gear block 152 through the driving belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the spring force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base 130 to pivot counter-clockwise in Figure 3.

Once the two-way coupling gear 128 comes into engagement with the plane gear 124 of the intermediate gear block 104, pivotal movement of the pivotal base 130 is restricted. Then, the rotational driving force transmitted by the drive gear 156 to the two-way coupling gear 128 overcomes the spring force of the coil spring 150, causing slip between the mating surfaces of the slip plate 144 and the pivoting arm 138. As a result, the two-way coupling gear 128 starts to rotate clockwise, thus driving the plane gear 124 of the intermediate gear 104 counter-clockwise. The bevel gear 120 of the intermediate gear block 104 is thus rotated clockwise, causing the bevel gear 74 to drive the supply reel 26 to rewind the tape 12.

In the embodiment, magnetic tape 12 three-quarters inch (approximately 19 mm) wide is employed in the cartridge 10. In this case, eighty recording tracks can be formed, which corresponds to the number that can be formed on a 3.5 inch (approximately 89 mm) floppy disc. Each track formed on the tape 12 extends longitudinally along the tape 12. It will be appreciated that the length of each track depends solely on the length of the tape 12, and so can be substantially longer than the length of the recording tracks formed on a 3.5 inch (approximately 89 mm) floppy disc. In general, the capacity of each track on the tape 12 will be several tens of times greater than that of a track on a floppy disc. If the tape 12 is 12 m long, the capacity of the cartridge 10 will be approximately 20 megabytes.

Although the embodiment described employs coil springs 432 offset from the tape guides 412 for biasing the movable fitting blocks 415 towards the positioning section 402 through the extension 434, for resiliently maintaining the tape 12 at a predetermined position, it would be possible to wind the coil springs 432 around the guide bars 412, as shown in Figure 8. In this case, the movable fitting 415 receives one end of the coil spring 432 at the end adjacent to the fitting block 414b. The other end of the coil spring 432 is seated on the fitting block 414b.

As will be appreciated herefrom, in the embodiment, tracking of the disc drive head is easy. As a result, high-density recording becomes possible, and the magnetic tape can be tracked by means of tracking mechanisms as usually employed in disc drives.

Such an embodiment can provide a very large data storage capacity, and is suitable for use as back-up storage for hard-discs or floppy discs. Furthermore, it can be utilized in a filing system which requires high-capacity memory media. In addition, the embodiment can have functions such as automatically stopping the tape drive at the tape ends and/or of automatically reversing the tape driving direction.

The present invention is applicable to any type of magnetic tape cartridge compatible with disc drives.

## Claims
## Claims for the following Contracting States : AT, CH ( + LI), DE, FR, GB, IT, NL

1. A magnetic tape cartridge (10) comprising:
   a cartridge casing (14, 16) acceptable in a disc drive;
   a magnetic tape (12) suitable for transferring data between a recording track formed thereon and a disc drive head (502, 504);
   means (26, 28) for storing said tape (12);
   means (400) for registering a portion of said tape (12) at a location at which data can be transferred between said tape (12) and said disc drive head (502, 504), said registering means (400) including a recess (420) in said cartridge casing (14, 16) for receiving the conical top of a positioning pin (426) of said disc drive, and being effective to position said tape (12) with respect to said disc drive head (502, 504) so that said tape (12) is positioned at a predetermined distance from a rotational axis of said disc drive about which a magnetic disc would rotate; and

a tape driving mechanism (162, 128) for driving said tape (12).

2. A magnetic tape cartridge (10) according to claim 1 wherein said registering means (400) includes a guide member (414a) for defining a tape run path past said location, said guide member (414a) being position at a predetermined position with respect to said disc drive head (502, 504) when said cartridge (10) is loaded.

3. A magnetic tape cartridge (10) according to claim 2 wherein said tape driving mechanism (162, 128) includes a driving means (202) to be coupled with a driving shaft (310) of said disc drive for driving said tape (12), said driving shaft (310) extending along said rotational axis, and said guide member (414a) having a portion to be aligned with said driving shaft (310) for positioning said guide member (414a) at said predetermined position.

4. A magnetic tape cartridge (10) according to claim 3 wherein said registering means (400) defines said recess (420) for receiving said positioning pin (426) of said disc drive for positioning said guide member (414a) at said predetermined position with respect to said disc drive head (502, 504) in cooperation with said portion aligned with said driving shaft (310).

5. A magnetic tape cartridge (10) according to claim 2 wherein said registering means (400) has a guide plane (412) extending along said tape run path for guiding said tape (12) therealong.

6. A magnetic tape cartridge (10) according to claim 5 wherein said registering means (400) has a resilient means (432) for resiliently urging said tape (12) towards said guide member (414a).

7. A magnetic tape cartridge (10) according to claim 4 wherein said storing means (26, 28) comprises a pair of tape reels (26, 28) wound therearound with said tape (12).

8. A magnetic tape cartridge (10) according to claim 7 wherein said tape reels (26, 28) are rotatable about aligned rotational axes.

9. A magnetic tape cartridge (10) according to claim 8 wherein said registering means (400) includes means (430) for turning the tape running direction through approximately 90°.

10. A magnetic tape cartridge (10) according to claim 1 comprising:

a centre core assembly (200) received within said cartridge casing (14, 16) and exposed therefrom to be chucked by a disc driving mechanism of said disc drive, said centre core assembly (200) including a chucking means (218, 306) for establishing chucking engagement between said centre core assembly (200) and said disc driving mechanism for transmitting driving force of said disc driving mechanism to said tape driving mechanism (162, 128); and

a tape positioning means (400) housed within said cartridge casing (14, 16) for positioning said tape (12) at a predetermined position with respect to said disc drive head (502, 504), said tape positioning means (400) being coupled with said disc driving mechanism to position said tape (12) at said predetermined position and being independent of said centre core assembly (200).

11. A magnetic tape cartridge (10) according to claim 10 wherein said chucking means (218, 306) comprises a through opening (218) defined in said centre core assembly (200), and having at least one corner to receive a driving pin (306) provided in said disc driving mechanism for fixedly receiving said driving pin (306) at said corner for establishing said chucking engagement.

12. A magnetic tape cartridge (10) according to claim 11 wherein said driving pin (306) is normally biased in a direction away from said corner.

13. A magnetic tape cartridge (10) according to claim 10 wherein said centre core assembly (200) comprises a centre core disc (202) formed with a groove (216) extending around the periphery thereof for engaging with a drive belt (162) to transmit driving force transmitted to said centre core disc (202) by said disc drive mechanism.

14. A magnetic tape cartridge (10) according to claim 13 wherein said cartridge casing (14, 16) houses a pair of tape reels (26, 28) wound therearound with said tape (12).

15. A magnetic tape cartridge (10) according to claim 14 wherein said tape reels (26, 28) have aligned rotational axes.

**16.** A magnetic tape cartridge (10) according to claim 15 wherein said tape driving mechanism (162, 128) cooperates with said tape reels (26, 28) for driving one of said tape reels (26, 28) according to the tape driving direction, by transmitting driving force transmitted through said centre core disc (202) to said one of said tape reels (26, 28).

**17.** A magnetic tape cartridge (10) according to claim 16 wherein said disc driving mechanism is designed drivingly to rotate with said centre core disc (202) of said cartridge (10) in a first direction for driving said tape (12) in said forward direction, and in a second direction opposite to said first direction for driving said tape (12) in said reverse direction.

**18.** A magnetic tape cartridge (10) according to claim 10 wherein said tape positioning means (400) has a first portion (402a) to be aligned with a driving axis of said disc driving mechanism and a second portion (414a) located within said tape run path for positioning said tape (12) at said predetermined position with respect to said disc drive head (502, 504).

**19.** A magnetic tape cartridge (10) according to claim 18 wherein said tape positioning means (400) has said recess (420) for positioning said second portion (414a) with respect to said disc drive by engaging with said positioning pin (426) of said disc drive.

**20.** A magnetic tape cartridge (10) according to claim 19 wherein said tape positioning means (400) has a positioning plane (412) extending substantially along a tape run path for guiding said tape (12) therealong.

**21.** A magnetic tape cartridge (10) according to claim 20 wherein said tape positioning means (400) is further provided with a bias means (432) for constantly biasing said tape (12) towards said second portion (414a).

**22.** A magnetic tape cartridge (10) according to claim 21 wherein said bias means (432) is a resilient means (432) for resiliently pressing said tape (12) towards said second portion (414a).

**23.** A magnetic tape cartridge (10) according to claim 22 wherein said tape positioning means (400) includes a deflector means (430) for changing the tape run direction through about 90°.

**24.** A magnetic tape cartridge (10) according to any one of the preceding claims wherein said tape driving mechanism (162, 128) includes a coupling gear (128) selectively movable between a first and a second position for driving said tape (12) in forward and reverse directions respectively.

**Claims for the following Contracting State : ES**

**1.** A magnetic tape cartridge (10) comprising:
a cartridge casing (14, 16) acceptable in a disc drive;
a magnetic tape (12) suitable for transferring data between a recording track formed thereon and a disc drive head (502, 504);
means (26, 28) for storing said tape (12);
means (400) for registering a portion of said tape (12) at a location at which data can be transferred between said tape (12) and said disc drive head (502, 504), said registering means (400) positioning said tape (12) with respect to said disc drive head (502, 504) so that said tape (12) is positioned at a predetermined distance from a rotational axis of said disc drive about which a magnetic disc would rotate; and
means (162, 128) for feeding said tape (12) past said location.

**2.** A magnetic tape cartridge (10) according to claim 1 wherein said registering means (400) includes a guide member (414a) for defining a tape run path past said location, said guide member (414a) being position at a predetermined position with respect to said disc drive head (502, 504) when said cartridge (10) is loaded.

**3.** A magnetic tape cartridge (10) according to claim 2 wherein said feeding means (162, 128) includes a driving means (202) to be coupled with a driving shaft (310) of said disc drive for driving said tape (12), said driving shaft (310) extending along said rotational axis, and said guide member (414a) having a portion to be aligned with said driving shaft (310) for positioning said guide member (414a) at said predetermined position.

**4.** A magnetic tape cartridge (10) according to claim 3 wherein said registering means (400) also defines a recess (420) for receiving a positioning pin (426) of said disc drive for positioning said guide member (414a) at said predetermined position with respect to said disc drive head (502, 504) in cooperation with said portion aligned with said driving shaft (310).

5. A magnetic tape cartridge (10) according to claim 2 wherein said registering means (400) has a guide plane (412) extending along said tape run path for guiding said tape (12) therealong.

6. A magnetic tape cartridge (10) according to claim 5 wherein said registering means (400) has a resilient means (432) for resiliently urging said tape (12) towards said guide member (414a).

7. A magnetic tape cartridge (10) according to claim 4 wherein said storing means (26, 28) comprises a pair of tape reels (26, 28) wound therearound with said tape (12).

8. A magnetic tape cartridge (10) according to claim 7 wherein said tape reels (26, 28) are rotatable about aligned rotational axes.

9. A magnetic tape cartridge (10) according to claim 8 wherein said registering means (400) includes means (430) for turning the tape running direction through approximately 90°.

10. A magnetic tape cartridge (10) according to claim 1 wherein said means (162, 128) for feeding said tape (12) is a tape drive mechanism for driving said tape (12) selectively in forward and reverse directions;
and comprising:
a centre core assembly (200) received within said cartridge casing (14, 16) and exposed therefrom to be chucked by a disc driving mechanism of said disc drive, said centre core assembly (200) including a chucking means (218, 306) for establishing chucking engagement between said centre core assembly (200) and said disc driving mechanism for transmitting driving force of said disc driving mechanism to said tape driving mechanism (162, 128); and
a tape positioning means (400) housed within said cartridge casing (14, 16) for positioning said tape (12) at a predetermined position with respect to said disc drive head (502, 504), said tape positioning means (400) being coupled with said disc driving mechanism to position said tape (12) at said predetermined position and being independent of said centre core assembly (200).

11. A magnetic tape cartridge (10) according to claim 10 wherein said chucking means (218, 306) comprises a through opening (218) defined in said centre core assembly (200), and having at least one corner to receive a driving pin (306) provided in said disc driving mechanism for fixedly receiving said driving pin (306) at said corner for establishing said chucking engagement.

12. A magnetic tape cartridge (10) according to claim 11 wherein said driving pin (306) is normally biased in a direction away from said corner.

13. A magnetic tape cartridge (10) according to claim 10 wherein said centre core assembly (200) comprises a centre core disc (202) formed with a groove (216) extending around the periphery thereof for engaging with a drive belt (162) to transmit driving force transmitted to said centre core disc (202) by said disc drive mechanism.

14. A magnetic tape cartridge (10) according to claim 13 wherein said cartridge casing (14, 16) houses a pair of tape reels (26, 28) wound therearound with said tape (12).

15. A magnetic tape cartridge (10) according to claim 14 wherein said tape reels (26, 28) have aligned rotational axes.

16. A magnetic tape cartridge (10) according to claim 15 wherein said tape driving mechanism (162, 128) cooperates with said tape reels (26, 28) for driving one of said tape reels (26, 28) according to the tape driving direction, by transmitting driving force transmitted through said centre core disc (202) to said one of said tape reels (26, 28).

17. A magnetic tape cartridge (10) according to claim 16 wherein said disc driving mechanism is designed drivingly to rotate with said centre core disc (202) of said cartridge (10) in a first direction for driving said tape (12) in said forward direction, and in a second direction opposite to said first direction for driving said tape (12) in said reverse direction.

18. A magnetic tape cartridge (10) according to claim 10 wherein said tape positioning means (400) has a first portion (402a) to be aligned with a driving axis of said disc driving mechanism and a second portion (414a) located within said tape run path for positioning said tape (12) at said predetermined position with respect to said disc drive head (502, 504).

19. A magnetic tape cartridge (10) according to claim 18 wherein said tape positioning means (400) has means (420) for positioning said second portion (414a) with respect to said disc drive by engaging with a positioning pin (426) in said disc drive.

20. A magnetic tape cartridge (10) according to claim 19 wherein said tape positioning means (400) has a positioning plane (412) extending substantially along a tape run path for guiding said tape (12) therealong.

21. A magnetic tape cartridge (10) according to claim 20 wherein said tape positioning means (400) is further provided with a bias means (432) for constantly biasing said tape (12) towards said second portion (414a).

22. A magnetic tape cartridge (10) according to claim 21 wherein said bias means (432) is a resilient means (432) for resiliently pressing said tape (12) towards said second portion (414a).

23. A magnetic tape cartridge (10) according to claim 22 wherein said tape positioning means (400) includes a deflector means (430) for changing the tape run direction through about 90°.

24. A magnetic tape cartridge (10) according to any one of the preceding claims wherein said means (162, 128) for feeding said tape (12) past said location includes a coupling gear (128) selectively movable between a first and a second position for driving said tape (12) in forward and reverse directions respectively.

**Patentansprüche**
**Patentansprüche für folgende Vertragsstaaten : AT, CH, DE, FR, GB, IT, LI, NL**

1. Magnetbandkassette (10), die umfaßt:
   ein Kassettengehäuse (14,16), das in einem Plattenlaufwerk aufnehmbar ist;
   ein Magnetband (12), das geeignet ist, Daten zwischen einer darauf gebildeten Aufzeichnungsspur und einem Plattenlaufwerkskopf (502,504) zu übertragen;
   eine Einrichtung (26,28) zur Speicherung des Bandes (12);
   Mittel (400) zur Registrierung eines Bereiches des Bandes (12) an einer Stelle, an welcher Daten zwischen dem Band (12) und dem Plattenlaufwerkskopf (502,504) übertragen werden können, wobei die Mittel zur Registrierung (400) eine Aussparung (420) in dem Kassettengehäuse (14,16) zum Empfang des konischen Kopfes eines Positionsstiftes (426) des Plattenlaufwerks einschließen und wirksam sind, das Band (12) in Bezug auf den Plattenlaufwerkskopf (502,504) zu positionieren, so daß das Band (12) in einer vorgegebenen Entfernung von der Drehachse des Plattenlaufwerks positioniert ist, um welche eine Magnetplatte sich drehen würde, sowie
   einen Bandantriebsmechanismus (162,128) zum Antrieb des Bandes (12).

2. Magnetbandkassette (10) nach Anspruch 1, wobei die genannten Mittel (400) zur Registrierung ein Führungsteil (414a) zur Bestimmung der Bandlaufbahn an dieser Stelle vorbei aufweisen, wobei das Führungsteil (414a) an einer vorgegebenen Stelle in Bezug zum Plattenlaufwerkskopf (502,504) positioniert ist, wenn die Kassette (10) geladen wird.

3. Magnetbandkassette (10) nach Anspruch 2, wobei der Bandantriebsmechanismus (162,128) Antriebsmittel (202) einschließt, die mit einer Antriebswelle (310) des Plattenlaufwerks zum Antrieb des Bandes (12) verbunden sind, wobei die Antriebswelle (310) sich längs der Drehachse erstreckt, und wobei das Führungsteil (414a) einen Bereich aufweist, der mit der Antriebswelle (310) fluchtet, um das Führungsteil (414a) an einer vorgegebenen Position zu positionieren.

4. Magnetbandkassette (10) nach Anspruch 3, wobei die Mittel zur Registrierung (400) die Aussparung (420) zur Aufnahme des Positionsstiftes (426) des Plattenlaufwerks zur Positionierung des Führungsteils (414a) in einer vorgegebenen Position in Bezug zum Plattenlaufwerkskopf (502,504) unter Mitwirkung mit dem Teil, das mit der Antriebswelle (310) fluchtet, begrenzen.

5. Magnetbandkassettte (10) nach Anspruch 2, wobei die Mittel zur Registrierung (400) eine Führungsebene (412) aufweisen, die sich entlang der Bandlaufbahn zur Führung des Bandes (12) erstrecken.

6. Magnetbandkassette (10) nach Anspruch 5, wobei die Mittel zur Registrierung (400) eine federnde Einrichtung (432) aufweisen, um das Band (12) federnd gegen das Führungsstück (414a) zu zwingen.

7. Magnetbandkassette (10) nach Anspruch 4, wobei die Speichereinrichtung (26,28) ein Paar mit dem Band (12) umwickelten Bandrollen umfaßt.

8. Magnetbandkassette (10) nach Anspruch 7, wobei die Bandrollen (26,28) um in gleicher Flucht angeordnete Drehachsen drehbar angeordnet sind.

9. Magnetbandkassette (10) nach Anspruch 8, wobei die Mittel zur Registrierung (400) eine Einrichtung (430) einschließen, um die Bandlaufrichtung um ungefähr 900 umzulenken.

10. Magnetbandkassette (10) nach Anspruch 1, die folgendes umfaßt: eine zentrale Kerneinheit (200) im Kassettengehäuse (14,16), die offen ist, um durch einen Plattenantriebsmechanismus des Plattenlaufwerks eingespannt zu werden, wobei die zentrale Kerneinheit (200) eine Einspanneinrichtung (218,306) einschließt, um eine Einspannverbindung zwischen der zentralen Kerneinheit (200) und dem Plattenantriebsmechanismus zur Übertragung der Antriebskraft des Plattenantriebsmechanismus zum Bandantriebsmechanismus (162,128) herzustellen; sowie
eine Bandpositionseinrichtung (400), die innerhalb des Kassettengehäuses angeordnet ist, um das Band (12) in einer vorbestimmten Position in Bezug auf den Plattenlaufwerkskopf (502,504) zu positionieren, wobei die Bandpositionseinrichtung (400) mit dem Plattenantriebsmechanismus gekoppelt ist, um das Band (12) in der vorbestimmten Position zu positionieren und die unabhängig von der zentralen Kerneinheit (200) ist.

11. Magnetbandkassette (10) nach Anspruch 10, wobei die Einspanneinrichtung (218,306) eine durchgehende Öffnung (218) in der zentralen Kerneinheit (200) aufweist, die wenigstens eine Ecke aufweist, um einen Antriebsstift (306) aufzunehmen, der in dem Plattenantriebsmechanismus zur kraftschlüssigen Aufnahme des Antriebsstiftes (306) in dieser Ecke zur Schaffung der Einspannverbindung vorgesehen ist.

12. Magnetbandkassette (10) nach Anspruch 10, wobei der Antriebsstift (306) im rechten Winkel in einer Richtung wegweisend von der genannten Ecke vorgespannt ist.

13. Magnetbandkassette (10) nach Anspruch 10, wobei die zentrale Kerneinheit (200) eine zentrale Kernplatte (202) umfaßt, die eine Nut (216) aufweist, die sich rund um deren Umfang erstreckt, um mit einem Antriebsriemen (162) in Eingriff zu stehen, um die Antriebskraft zur zentralen Kerneinheit (202) durch den Plattenantriebsmechanismus zu übertragen.

14. Magnetbandkssette (10) nach Anspruch 13, wobei das Kassettengehäuse (14,16) zwei Bandrollen (26,28) enthält, die mit dem Band (12) umwickelt sind.

15. Magnetbandkassette (10) nach Anspruch 14, wobei die Bandrollen (26,28) in gleicher Flucht verlaufende Drehachsen aufweisen.

16. Magnetbandkassette (10) nach Anspruch 15, wobei der Bandantriebsmechanismus (162, 128) mit den Bandrollen (26,28) zusammenarbeitet, um eine der Bandrollen (26,28) entsprechend der Bandantriebsrichtung durch Übertragung der Antriebskraft anzutreiben, die durch die zentrale Kernplatte (202) zu einer der Bandrollen (26,28) übertragen wird.

17. Magnetbandkassette (10) nach Anspruch 16, wobei der Plattenantriebsmechanismus antriebsmäßig ausgelegt ist, um mit der zentralen Kernplatte (202) der Kassette (10) in einer ersten Richtung zum Antrieb des Bandes (12) in Vorwärtsrichtung sowie in einer zweiten entgegengesetzt zur ersten Richtung zum Antrieb des Bandes (12) in umgekehrter Richtung zu rotieren.

18. Magnetbandkassette (10) nach Anspruch 10, wobei die Bandpositionseinrichtung (400) einen ersten Bereich (402a) aufweist, der in Flucht mit der Antriebsachse des Plattenantriebsmechanismus ist, und einen zweiten Bereich (414a) aufweist, der innerhalb der Bandlaufbahn angeordnet ist, um das Band (12) in der vorbestimmten Position bezüglich des Bandlaufwerkkopfes (502,504) zu positionieren.

19. Magnetbandkassette (10) nach Anspruch 16, wobei die Bandpositionseinrichtung (400) eine Ausnehmung (420) aufweist, um den zweiten Bereich (414a) in Bezug auf den Plattenantrieb durch Eingreifen des Positionsstiftes (426) des Plattenlaufwerks zu positionieren.

20. Magnetbandkassette (10) nach Anspruch 19, wobei die Bandpositionseinrichtung (400) eine Positionsebene (412) aufweist, die sich im wesentlichen entlang eine Bandlaufbahn erstreckt, um das Band (12) daran entlangzuführen.

21. Magnetbandkassette (10) nach Anspruch 20, wobei die Bandpositionseinrichtung (400) weiterhin mit einer Vorspanneinrichtung (432) ausgestattet ist, um das Band (12) konstant gegen den zweiten Bereich (414a) vorzuspannen.

22. Magnetbandkassette (10) nach Anspruch 21, wobei die Vorspanneinrichtung (432) durch federnde Mittel (432) gebildet ist, um das Band (12) federnd gegen den zweiten Bereich zu drücken.

23. Magnetbandkassette (10) nach Anspruch 22, wobei die Bandpositionseinrichtung (400) eine Ablenkeinrichtung (430) zum Wechseln der Bandlaufrichtung um ungefähr 90° aufweist.

24. Magnetbandkassette (10) nach Anspruch 10, nach einem der vorhergehenden Ansprüche, wobei der Bandantriebsmechanismus (162,128) eine Einrückvorrichtung (128) aufweist, die wahlweise zwischen einer ersten und einer zweiten Position bewegbar ist, um das Band (12) entsprechend in Vorwärts- oder Rückwärtsrichtung anzutreiben.

**Patentansprüche für folgenden Vertragsstaat : ES**

1. Magnetbandkassette (10), die umfaßt:
ein Kassettengehäuse (14,16), das in einen Plattenlaufwerk aufnehmbar ist;
ein Magnetband (12), das geeignet ist, Daten zwischen einer darauf gebildeten Aufzeichnungsspur und einem Plattenlaufwerkskopf (502,504) zu übertragen;
eine Einrichtung (26,28) zur Speicherung des Bandes (12);
Mittel (400) zur Registrierung eines Bereiches des Bandes (12) an einer Stelle, an welcher Daten zwischen dem Band (12) und dem Plattenlaufwerkskopf (502,504) übertragen werden können, wobei die Mittel zur Registrierung (400) das Band (12) in Bezug auf den Plattenlaufwerkskopf (502,504) positionieren, so daß das Band (12) in einer vorgegebenen Entfernung von der Drehachse des Plattenlaufwerks positioniert ist, um welche eine Magnetplatte sich drehen würde, sowie
eine Einrichtung (162,128) zum Führen des Bandes (12) an dieser Stelle vorbei.

2. Magnetbandkassette (10) nach Anspruch 1, wobei die genannten Mittel (400) zur Registrierung ein Führungsteil (414a) zur Bestimmung der Bandlaufbahn an dieser Stelle vorbei aufweisen, wobei das Führungsteil (414a) an einer vorgegebenen Stelle in Bezug zum Plattenlaufwerkskopf (502,504) positioniert ist, wenn die Kassette (10) geladen wird.

3. Magnetbandkassette (10) nach Anspruch 2, wobei die Führungseinrichtung 162,128) Antriebsmittel (202) einschließt, die mit einer Antriebswelle (310) des Plattenlaufwerks zum Antrieb des Bandes (12) verbunden sind, wobei die Antriebswelle (310) sich längs der Drehachse erstreckt, und wobei das Führungsteil (414a) einen Bereich aufweist, der mit der Antriebswelle (310) fluchtet, um das Führungsteil (414a) an einer vorgegebenen Position zu positionieren.

4. Magnetbandkassette (10) nach Anspruch 3, wobei die Mittel zur Registrierung (400) eine Aussparung (420) zur Aufnahme eine Positionsstiftes (426) des Plattenlaufwerks zur Positionierung des Führungsteils (414a) in der vorgegebenen Position in Bezug zum Plattenlaufwerkskopf (502,504) unter Mitwirkung mit dem Teil, das mit der Antriebswelle (310) fluchtet, begrenzen.

5. Magnetbandkassettte (10) nach Anspruch 2, wobei die Mittel zur Registrierung (400) eine Führungsebene (412) aufweisen, die sich entlang der Bandlaufbahn zur Führung des Bandes (12) erstrecken.

6. Magnetbandkassette (10) nach Anspruch 5, wobei die Mittel zur Registrierung (400) eine federnde Einrichtung (432) aufweisen, um das Band (12) federnd gegen das Führungsstück (414a) zu zwingen.

7. Magnetbendkassette (10) nach Anspruch 4, wobei die Speichereinrichtung (26,28) ein Paar mit dem Band (12) umwickelten Bandrollen umfaßt.

8. Magnetbandkassette (10) nach Anspruch 7, wobei die Bandrollen (26,28) um in gleicher Flucht angeordnete Drehachsen drehbar angeordnet sind.

9. Magnetbandkassette (10) nach Anspruch 8, wobei die Mittel zur Registrierung (400) eine Einrichtung (430) einschließen, um die Bandlaufrichtung um ungefähr 90° umzulenken.

10. Magnetbandkassette (10) nach Anspruch 1, bei der die Einrichtung (162,128) zur Führung des Bandes (12) ein Bandentriebsmechanismus ist zum Antrieb des Bandes (12) selektiv in der Vorwärts- und Rückwärtsrichtung und die folgendes umfaßt:
eine zentrale Kerneinheit (200) im Kassettengehäuse (14,16), die offen ist, um durch einen Plattenantriebsmechanismus des Plattenlaufwerks eingespannt zu werden, wobei die zentrale Kerneinheit (200) eine Einspanneinrichtung (218,306) einschließt, um eine Einspannverbindung zwischen der zentralen Kerneinheit (200) und dem Plattenantriebsmechanismus zur Übertragung der Antriebskraft des Plattenantriebsmechanismus zum Bandantriebsmechanismus (162,128) herzustellen; sowie

eine Bandpositionseinrichtung (400), die innerhalb des Kassettengehäuses angeordnet ist, um das Band (12) in einer vorbestimmten Position in Bezug auf den Plattenlaufwerkskopf (502,504) zu positionieren, wobei die Bandpositionseinrichtung (400) mit dem Plattenantriebsmechanismus gekoppelt ist, um das Band (12) in der vorbestimmten Position zu positionieren und die unabhängig von der zentralen Kerneinheit (200) ist.

11. Magnetbandkassette (10) nach Anspruch 10, wobei die Einspanneinrichtung (218,306) eine durchgehende Öffnung (218) in der zentralen Kerneinheit (200) aufweist, die wenigstens eine Ecke aufweist, um einen Antriebsstift (306) aufzunehmen, der in dem Plattenantriebsmechanismus zur kraftschlüssigen Aufnahme des Antriebsstiftes (306) in dieser Ecke zur Schaffung der Einspannverbindung vorgesehen ist.

12. Magnetbandkassette (10) nach Anspruch 10, wobei der Antriebsstift (306) im rechten Winkel in einer Richtung wegweisend von der genannten Ecke vorgespannt ist.

13. Magnetbandkassette (10) nach Anspruch 10, wobei die zentrale Kerneinheit (200) eine zentrale Kernplatte (202) umfaßt, die eine Nut (216) aufweist, die sich rund um deren Umfang erstreckt, um mit einem Antriebsriemen (162) in Eingriff zu stehen, um die Antriebskraft zur zentralen Kernplatte (202) durch den Plattenantriebsmechanismus zu übertragen.

14. Magnetbandkssette (10) nach Anspruch 13, wobei das Kassettengehäuse (14,16) zwei Bandrollen (26,28) enthält, die mit dem Band (12) umwickelt sind.

15. Magnetbandkassette (10) nach Anspruch 14, wobei die Bandrollen (26,28) in gleicher Flucht verlaufende Drehachsen aufweisen.

16. Magnetbandkassette (10) nach Anspruch 15, wobei der Bandantriebsmechanismus (162, 128) mit den Bandrollen (26,28) zusammenarbeitet, um eine der Bandrollen (26,28) entsprechend der Bandantriebsrichtung durch Übertragung der Antriebskraft anzutreiben, die durch die zentrale Kernplatte (202) zu einer der Bandrollen (26,28) übertragen wird.

17. Magnetbandkassette (10) nach Anspruch 16, wobei der Plattenantriebsmechanismus antriebsmäßig ausgelegt ist, um mit der zentralen Kernplatte (202) der Kassette (10) in einer ersten Richtung zum Antrieb des Bandes (12) in Vorwärtsrichtung sowie in einer zweiten entgegengesetzt zur ersten Richtung zum Antrieb des Bandes (12) in umgekehrter Richtung zu rotieren.

18. Magnetbandkassette (10) nach Anspruch 10, wobei die Bandpositionseinrichtung (400) einen ersten Bereich (402a) aufweist, der in Flucht mit der Antriebsachse des Plattenantriebsmechanismus ist, und einen zweiten Bereich (414a) aufweist, der innerhalb der Bandlaufbahn angeordnet ist, um das Band (12) in der vorbestimmten Position bezüglich des Bandlaufwerkkopfes (502,504) zu positionieren.

19. Magnetbandkassette (10) nach Anspruch 16, wobei die Bandpositionseinrichtung (400) eine Ausnehmung (420) aufweist, um den zweiten Bereich (414a) in Bezug auf den Plattenantrieb durch Eingreifen des Positionsstiftes (426) des Plattenlaufwerks zu positionieren.

20. Magnetbandkassette (10) nach Anspruch 19, wobei die Bandpositionseinrichtung (400) eine Positionsebene (412) aufweist, die sich im wesentlichen entlang eine Bandlaufbahn erstreckt, um das Band (12) daran entlangzuführen.

21. Magnetbandkassette (10) nach Anspruch 20, wobei die Bandpositionseinrichtung (400) weiterhin mit einer Vorspanneinrichtung (432) ausgestattet ist, um das Band (12) konstant gegen den zweiten Bereich (414a) vorzuspannen.

22. Magnetbandkassette (10) nach Anspruch 21, wobei die Vorspanneinrichtung (432) durch federnde Mittel (432) gebildet ist, um das Band (12) federnd gegen den zweiten Bereich zu drücken.

23. Magnetbandkassette (10) nach Anspruch 22, wobei die Bandpositionseinrichtung (400) eine Ablenkeinrichtung (430) zum Wechseln der Bandlaufrichtung um ungefähr 90° aufweist.

24. Magnetbandkassette (10) nach Anspruch 10, nach einem der vorhergehenden Ansprüche, wobei der Bandantriebsmechanismus (162,128) eine Einrückvorrichtung (128) aufweist, die wahlweise zwischen einer ersten und einer zweiten Position bewegbar ist, um das Band (12) entsprechend in Vorwärts- oder Rückwärtsrichtung anzutreiben.

**Revendications**
**Revendications pour les Etats contractants suivants : AT, CH, DE, FR, GB, IT, LI, NL**

1. Cartouche à bande magnétique (10) comportant :

   un boîtier de cartouche (14, 16) pouvant être reçu dans un lecteur de disque;

   une bande magnétique (12) adaptée au transfert de données entre une piste d'enregistrement formée dessus et une tête de lecteur de disque (502; 504);

   des moyens (26, 28) destinés à stocker ladite bande (12);

   des moyens (400) destinés à positionner une partie de ladite bande (12) dans un emplacement au niveau duquel des données peuvent être transférées entre ladite bande (12) et ladite tête de lecteur de disque (502, 504), lesdits moyens de positionnement (400) comprenant un renfoncement (420) dans ledit boîtier de cartouche (14, 16) destiné recevoir l'extrémité conique d'un axe de positionnement (426) dudit lecteur de disque, et servant à positionner ladite bande (12) par rapport à ladite tête de lecteur de disque (502, 504) de telle sorte que ladite bande (12) est positionnée à une distance prédéterminée de l'axe de rotation dudit lecteur de disque autour duquel un disque magnétique tournerait; et

   un mécanisme d'entraînement de bande (162, 128) destiné à entraîner ladite bande (12).

2. Cartouche à bande magnétique (10) selon la revendication 1, dans laquelle lesdits moyens de positionnement (400) comprennent un élément de guidage (414a) destiné à définir un passage de défilement de bande au-delà dudit emplacement, ledit élément de guidage (414a) étant positionné dans une position prédéterminée par rapport à ladite tête de lecteur de disque (502, 504) lorsque ladite cartouche (10) est chargée.

3. Cartouche à bande magnétique (10) selon la revendication 2, dans laquelle ledit mécanisme d'entraînement de bande (162, 128) comprend des moyens d'entraînement (202) devant être reliés à un axe d'entraînement (310) dudit lecteur de disque afin d'entraîner ladite bande (12), ledit axe d'entraînement (310) s'étendant le long dudit axe de rotation, et ledit élément de guidage (414a) ayant une partie devant être alignée avec ledit axe d'entraînement (310) afin de positionner ledit élément de guidage (414a) dans ladite position prédéterminée.

4. Cartouche à bande magnétique (10) selon la revendication 3, dans laquelle lesdits moyens de positionnement (400) définissent ledit renfoncement (420) destiné à recevoir ledit axe de positionnement (426) dudit lecteur de disque afin de positionner ledit élément de guidage (414a) dans ladite position prédéterminée par rapport à ladite tête de lecteur de disque (502, 504) en coopération avec ladite partie alignée avec ledit axe d'entraînement (310).

5. Cartouche à bande magnétique (10) selon la revendication 2, dans laquelle lesdits moyens de positionnement (400) possèdent un plan de guidage (412) s'étendant le long dudit passage de défilement de bande afin de guider ladite bande (12) le long de celui-ci.

6. Cartouche à bande magnétique (10) selon la revendication 5, dans laquelle lesdits moyens de positionnement (400) possèdent des moyens élastiques (432) destinés à pousser élastiquement ladite bande (12) vers ledit élément de guidage (414a).

7. Cartouche à bande magnétique (10) selon la revendication 4, dans laquelle lesdits moyens de stockage (26, 28) comprennent une paire de bobines de bande (26, 28) sur lesquelles est enroulée ladite bande (12).

8. Cartouche à bande magnétique (10) selon la revendication 7, dans laquelle lesdites bobines de bande (26, 28) peuvent tourner autour d'axes de rotation alignés.

9. Cartouche à bande magnétique (10) selon la revendication 8, dans laquelle lesdits moyens de positionnement (400) comprennent des moyens (430) destinés à changer la direction de défilement de bande d'approximativement 90°.

10. Cartouche à bande magnétique (10) selon la revendication 1 comportant :
   un ensemble central (200) logé dans ledit boîtier de cartouche (14, 16) et exposé de façon à être serré par un mécanisme d'entraînement de disque dudit lecteur de disque, ledit ensemble central (200) comprenant des moyens de serrage (218, 306) destinés à établir l'engagement de serrage entre ledit ensemble central (200) et ledit mécanisme d'entraînement de disque afin de transmettre la force d'entraînement dudit mécanisme d'entraînement de disque audit mécanisme d'entraînement de bande (162, 128); et

   des moyens de positionnement de bande (400) logés dans ledit boîtier de cartouche (14, 16) afin de positionner ladite bande (12) dans une position prédéterminée par rapport à ladite tête de lecteur de disque (502, 504), lesdits moyens de positionnement de bande (400) étant reliés audit mécanisme d'entraînement de disque afin de positionner ladite bande (12) dans ladite position prédéterminée et étant indépendant dudit ensemble central (200).

11. Cartouche à bande magnétique (10) selon la revendication 10, dans laquelle lesdits moyens de serrage (218, 306) comprennent une ouverture (218) définie dans ledit ensemble central (200), et ayant au moins un coin destiné à recevoir un axe d'entraînement (306) prévu dans ledit mécanisme d'entraînement de disque afin de recevoir de façon fixe ledit axe d'entraînement (306) dans ledit coin pour établir ledit engagement de serrage.

12. Cartouche à bande magnétique (10) selon la revendication 11, dans laquelle ledit axe d'entraînement (306) est normalement rappelé dans une direction à l'écart dudit coin.

13. Cartouche à bande magnétique (10) selon la revendication 10, dans laquelle ledit ensemble central (200) comporte un disque central (202) réalisé avec une rainure (216) s'étendant autour de la périphérie de celui-ci afin d'engager une courroie d'entraînement (162) de façon à transmettre une force d'entraînement transmise audit ensemble central (200) par ledit mécanisme d'entraînement.

14. Cartouche à bande magnétique (10) selon la revendication 13, dans laquelle ledit boîtier de cartouche (14, 16) loge une paire de bobines de bande (26, 28) sur lesquelles est enroulée ladite bande (12).

15. Cartouche à bande magnétique (10) selon la revendication 14, dans laquelle lesdites bobines de bande (26, 28) ont des axes de rotation alignés.

16. Cartouche à bande magnétique (10) selon la revendication 15, dans laquelle ledit mécanisme d'entraînement de bande (162, 128) coopère avec lesdites bobines de bande (26, 28) afin d'entraîner une desdites bobines de bande (26, 28) suivant la direction d'entraînement de bande, en transmettant une force d'entraînement transmise par ledit disque central (202) à ladite bobine de bande (26, 28).

17. Cartouche à bande magnétique (10) selon la revendication 16, dans laquelle ledit mécanisme d'entraînement de bande est conçu pour tourner avec ledit disque central (202) de ladite cartouche (10) dans une première direction afin d'entraîner ladite bande (12) dans ladite direction avant, et dans une deuxième direction opposée à ladite première direction afin d'entraîner ladite bande (12) dans ladite direction inverse.

18. Cartouche à bande magnétique (10) selon la revendication 10, dans laquelle lesdits moyens de positionnement de bande (400) possèdent une première partie (402a) devant être alignée avec un axe d'entraînement dudit mécanisme d'entraînement de disque et une deuxième partie (414a) située à l'intérieur dudit passage de défilement de bande afin de positionner ladite bande (12) dans ladite position prédéterminée par rapport à ladite tête de lecteur de disque (502, 504).

19. Cartouche à bande magnétique (10) selon la revendication 18, dans laquelle lesdits moyens de positionnement de bande (400) possèdent ledit renfoncement (420) destiné à positionner ladite deuxième partie (414a) par rapport audit lecteur de disque par engagement avec ledit axe de positionnement (426) dudit lecteur de disque.

20. Cartouche à bande magnétique (10) selon la revendication 19, dans laquelle lesdits moyens de positionnement de bande (400) possèdent un plan de guidage (412) s'étendant sensiblement le long d'un passage de défilement de bande afin de guider ladite bande (12) le long de celui-ci.

21. Cartouche à bande magnétique (10) selon la revendication 20, dans laquelle lesdits moyens de positionnement de bande (400) sont en outre pourvus de moyens de rappel (432) destinés à rappeler constamment ladite bande (12) vers ladite deuxième partie (414a).

22. Cartouche à bande magnétique (10) selon la revendication 21, dans laquelle lesdits moyens de rappel (432) sont des moyens élastiques (432) destinés à pousser élastiquement ladite bande (12) vers ledit élément de guidage (414a).

23. Cartouche à bande magnétique (10) selon la revendication 22, dans laquelle lesdits moyens de positionnement de bande (400) comprennent des moyens de déflexion (430) destinés à changer la direction de défilement de bande d'environ 90°.

**24.** Cartouche à bande magnétique (10) selon l'une quelconque des revendications précédentes, dans laquelle ledit mécanisme d'entraînement de bande (162, 128) comporte un pignon d'accouplement (128) sélectivement mobile entre une première et une deuxième position afin d'entraîner ladite bande (12) dans des directions respectivement avant et arrière.

**Revendications pour l'Etat contractant suivant : ES**

**1.** Cartouche à bande magnétique (10) comportant :

un boîtier de cartouche (14, 16) pouvant être reçu dans un lecteur de disque;

une bande magnétique (12) adaptée au transfert de données entre une piste d'enregistrement formée dessus et une tête de lecteur de disque (502; 504);

des moyens (26, 28) destinés à stocker ladite bande (12);

des moyens (400) destinés à positionner une partie de ladite bande (12) dans une emplacement au niveau duquel des données peuvent être transférées entre ladite bande (12) et ladite tête de lecteur de disque (502, 504), lesdits moyens de positionnement (400) positionnant ladite bande (12) par rapport à ladite tête de lecteur de disque (502, 504) de telle sorte que ladite bande (12) est positionnée à une distance prédéterminée de l'axe de rotation dudit lecteur de disque autour duquel un disque magnétique tournerait; et

des moyens (162, 128) destinés à faire défiler ladite bande (12) devant ledit emplacement.

**2.** Cartouche à bande magnétique (10) selon la revendication 1, dans laquelle lesdits moyens de positionnement (400) comprennent un élément de guidage (414a) destiné à définir un passage de défilement de bande au-delà dudit emplacement, ledit élément de guidage (414a) étant positionné dans une position prédéterminée par rapport à ladite tête de lecteur de disque (502, 504) lorsque ladite cartouche (10) est chargée.

**3.** Cartouche à bande magnétique (10) selon la revendication 2, dans laquelle lesdits moyens de défilement (162, 128) comprennent des moyens d'entraînement (202) devant être reliés à un axe d'entraînement (310) dudit lecteur de disque afin d'entraîner ladite bande (12), ledit axe d'entraînement (310) s'étendant le long dudit axe de rotation, et ledit élément de guidage (414a) ayant une partie devant être alignée avec ledit axe d'entraînement (310) afin de positionner ledit élément de guidage (414a) dans ladite position prédéterminée.

**4.** Cartouche à bande magnétique (10) selon la revendication 3, dans laquelle lesdits moyens de positionnement (400) définissement également un renfoncement (420) destiné à recevoir un axe de positionnement (426) dudit lecteur de disque afin de positionner ledit élément de guidage (414a) dans ladite position prédéterminée par rapport à ladite tête de lecteur de disque (502, 504) en coopération avec ladite partie alignée avec ledit axe d'entraînement (310).

**5.** Cartouche à bande magnétique (10) selon la revendication 2, dans laquelle lesdits moyens de positionnement (400) possèdent un plan de guidage (412) s'étendant le long dudit passage de défilement de bande afin de guider ladite bande (12) le long de celui-ci.

**6.** Cartouche à bande magnétique (10) selon la revendication 5 dans laquelle lesdits moyens de positionnement (400) possèdent des moyens élastiques (432) destinés à pousser élastiquement ladite bande (12) vers ledit élément de guidage (414a).

**7.** Cartouche à bande magnétique (10) selon la revendication 4, dans laquelle lesdits moyens de stockage (26, 28) comprennent une paire de bobines de bande (26, 28) sur lesquelles est enroulée ladite bande (12).

**8.** Cartouche à bande magnétique (10) selon la revendication 7, dans laquelle lesdites bobines de bande (26, 28) peuvent tourner autour d'axes de rotation alignés.

**9.** Cartouche à bande magnétique (10) selon la revendication 8, dans laquelle lesdits moyens de positionnement (400) comprennent des moyens (430) destinés à changer la direction de défilement de bande d'approximativement 90°.

**10.** Cartouche à bande magnétique (10) selon la revendication 1, où lesdits moyens (162, 128) destinés à faire défiler ladite bande (12) sont un mécanisme d'entraînement de bande permettent d'entraîner ladite bande (12) sélectivement dans les directions avant et arrière; et comportant :

un ensemble central (200) logé dans ledit boîtier de cartouche (14, 16) et exposé de façon à être serré par un mécanisme d'entraînement de disque dudit lecteur de disque, ledit ensemble central (200) comprenant des moyens de serrage (218, 306) destinés à établir l'engagement de serrage entre ledit ensemble central (200) et ledit mécanisme d'entraînement de disque afin de transmettre la force d'entraînement dudit mécanisme d'entraînement de disque audit mécanisme d'entraînement de bande (167, 128); et

des moyens de positionnement de bande (400) logés dans ledit boîtier de cartouche (14, 16) afin de positionner ladite bande (12) dans une position prédéterminée par rapport à ladite tête de lecteur de disque (502, 504), lesdits moyens de positionnement de bande (400) étant reliés audit mécanisme d'entraînement de disque afin de positionner ladite bande (12) dans ladite position prédéterminée et étant indépendants dudit ensemble central (200).

11. Cartouche à bande magnétique (10) selon la revendication 10, dans laquelle lesdits moyens de serrage (218, 306) comprennent une ouverture (218) définie dans ledit ensemble central (200), et ayant du moins un coin destiné à recevoir un axe d'entraînement (306) prévu dans ledit mécanisme d'entraînement de disque afin de recevoir de façon fixe ledit axe d'entraînement (306) dans ledit coin pour établir ledit engagement de serrage.

12. Cartouche à bande magnétique (10) selon la revendication 11, dans laquelle ledit axe d'entraînement (306) est normalement rappelé dans une direction à l'écart dudit coin.

13. Cartouche à bande magnétique (10) selon la revendication 10, dans laquelle ledit ensemble central (200) comporte un disque central (202) réalisé avec une rainure (216) s'étendant autour de la périphérie de celui-ci afin d'engager une courroie d'entraînement (162) de façon à transmettre une force d'entraînement transmise audit ensemble central (200) par ledit mécanisme d'entraînement.

14. Cartouche à bande magnétique (10) selon la revendication 13, dans laquelle ledit boîtier de cartouche (14, 16) loge une paire de bobines de bande (26, 28) sur lesquelles est enroulée ladite bande (12).

15. Cartouche à bande magnétique (10) selon la revendication 14, dans laquelle lesdites bobines de bande (26, 28) ont des axes de rotation alignés.

16. Cartouche à bande magnétique (10) selon la revendication 15, dans laquelle ledit mécanisme d'entraînement de bande (162, 128) coopère avec lesdites bobines de bande (26, 28) afin d'entraîner une desdites bobines de bande (26, 28) suivant la direction d'entraînement de bande, en transmettant une force d'entraînement transmise par ledit disque central (202) à ladite bobine de bande (26, 28).

17. Cartouche à bande magnétique (10) selon la revendication 16, dans laquelle ledit mécanisme d'entraînement de bande est conçu pour tourner avec ledit disque central (202) de ladite cartouche (10) dans une première direction afin d'entraîner ladite bande (12) dans ladite direction avant, et dans une deuxième direction opposée à ladite première direction afin d'entraîner ladite bande (12) dans ladite direction inverse.

18. Cartouche à bande magnétique (10) selon la revendication 10, dans laquelle lesdits moyens de positionnement de bande (400) possèdent une première partie (402a) devant être alignée avec un axe d'entraînement dudit mécanisme d'entraînement de disque et une deuxième partie (414a) située à l'intérieur dudit passage de défilement de bande afin de positionner ladite bande (12) dans ladite position prédéterminée par rapport à ladite tête de lecteur de disque (502, 504).

19. Cartouche à bande magnétique (10) selon la revendication 18, dans laquelle lesdits moyens de positionnement de bande (400) possèdent des moyens (420) destinés à positionner ladite deuxième partie (414a) par rapport audit lecteur de disque par engagement avec ledit axe de positionnement (426) dudit lecteur de disque.

20. Cartouche à bande magnétique (10) selon la revendication 19, dans laquelle lesdits moyens de positionnement de bande (400) possèdent un plan de guidage (412) s'étendant sensiblement le long d'un passage de défilement de bande afin de guider ladite bande (12) le long de celui-ci.

21. Cartouche à bande magnétique (10) selon la revendication 20, dans laquelle lesdits moyens de positionnement de bande (400) sont en outre pourvus de moyens de rappel (432) destinés à rappeler constamment ladite bande (12) vers ladite deuxième partie (414a).

22. Cartouche à bande magnétique (10) selon la revendication 21, dans laquelle lesdits moyens de rappel (432) sont des moyens élastiques (432) destinés à pousser élastiquement ladite bande (12) vers ledit élément de guidage (414a).

23. Cartouche à bande magnétique (10) selon la revendication 22, dans laquelle lesdits moyens de positionnement de bande (400) comprennent des moyens de déflexion (430) destinés à changer la direction de défilement de bande d'environ 90°.

24. Cartouche à bande magnétique (10) selon l'une quelconque des revendications précédentes, dans laquelle lesdits moyens (162, 128) destinés à faire défiler ladite bande (12) devant ledit emplacement comportent un pignon d'accouplement (128) sélectivement mobile entre une première et une deuxième position afin d'entraîner ladite bande (12) dans des directions respectivement avant et arrière.

## FIG.1

## FIG.2

FIG.3

EP 0 228 904 B1

# FIG.4

# FIG.8

FIG.5

EP 0 228 904 B1

## FIG.6

FIG.7

EP 0 228 904 B1